# EUROPEAN PATENT APPLICATION

(11) **EP 4 823 203 A1**
(43) Date of publication of application: **14.10.2026**
(21) Application number: 24911567.6
(22) Date of filing: 27.12.2024
(51) Int. Cl.: H04W 72/0446

(54) **COMMUNICATION METHOD AND APPARATUS**

(30) Priority: 28.12.2023 CN 202311849529
(71) Applicant: Huawei Technologies Co., Ltd., Shenzhen, Guangdong 518129 (CN)
(72) Inventor: HOU, Hailong, Shenzhen, Guangdong 518129 (CN); GUO, Zhiheng, Shenzhen, Guangdong 518129 (CN); LU, Shaozhong, Shenzhen, Guangdong 518129 (CN)
(74) Representative: Grünecker Patent- und Rechtsanwälte PartG mbB
(86) International application number: PCT/CN2024/143445
(87) International publication number: WO 2025/140651

(57) **Abstract**

Disclosed are a communication method and apparatus, which relate to the field of communication technologies, and are capable of improving communication system performance when spectrum sharing is performed between different communication systems. The method includes: receiving first information from a network device; and determining, based on the first information, a time domain resource and a frequency domain resource that are not for first channel transmission. The first information indicates the time domain resource and the frequency domain resource that are not for first channel transmission. The frequency domain resource indicated by the first information as not for first channel transmission includes one or more subcarriers in one or more resource blocks RBs that are indicated by the first information as not for first channel transmission. The first channel is a physical uplink shared channel or a physical downlink shared channel.

## Description

This application claims priority to Chinese Patent Application No. 202311849529.6, filed with the China National Intellectual Property Administration on December 28, 2023, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Spectrum sharing may be performed between different communication systems. For example, spectrum sharing may be performed between a long term evolution (long term evolution, LTE) communication system and a new radio (new radio, NR) communication system, or spectrum sharing may be performed between an NR communication system and a future communication system, to improve spectrum resource utilization.

When spectrum sharing is performed between the LTE communication system and the NR communication system, some downlink reference signals or downlink channels of the LTE communication system are continuously sent, and a physical downlink shared channel (physical downlink shared channel, PDSCH) of the NR communication system collides with these downlink reference signals or downlink channels of the LTE communication system and causes interference. Consequently, communication performance of the LTE communication system is affected. Based on this, a rate matching (rate matching, RM) mechanism is introduced into the NR communication system, to resolve the collision between the LTE communication system and the NR communication system, and improve communication performance.

However, the foregoing solution is applicable to improving communication performance between the LTE communication system and the NR communication system, but is not applicable to improving communication performance between other communication systems (for example, the NR communication system and the future communication system). Therefore, when spectrum sharing is performed between the NR communication system and the future communication system, how to improve communication performance becomes a technical problem to be urgently resolved.

### SUMMARY

This application provides a communication method and apparatus, to improve communication performance when spectrum sharing is performed between different communication systems.

According to a first aspect, this application provides a communication method. The method may be performed by a terminal device. Unless otherwise specified, the "terminal device" in this application may be the terminal device itself, or may be a component (for example, a processor, a chip, or a chip system) in the terminal device, or may be a logical module or software that can implement all or some functions of the terminal device. The method is applied to a first radio access technology RAT, and the method includes: receiving first information from a network device; and determining, based on the first information, a time domain resource and a frequency domain resource that are not for first channel transmission. The first information indicates the time domain resource and the frequency domain resource that are not for first channel transmission. The frequency domain resource indicated by the first information as not for first channel transmission includes one or more subcarriers in one or more resource blocks RBs that are indicated by the first information as not for first channel transmission. The first channel is a physical uplink shared channel or a physical downlink shared channel.

Based on the first aspect, the terminal device may determine, based on the first information, the time domain resource and the frequency domain resource that are not for first channel transmission, to avoid a signal collision, and improve communication system performance when spectrum sharing is performed between different communication systems.

In a possible design, the first information includes configuration information of one or more rate matching patterns, where a time-frequency resource associated with the rate matching pattern is the time domain resource and the frequency domain resource that are not for first channel transmission.

Based on this possible design, the network device may configure, for the terminal device based on a rate matching mechanism and by using a rate matching pattern, the time domain resource and the frequency domain resource that are not for first channel transmission.

In a possible design, configuration information of each rate matching pattern includes first indication information and second indication information, where the first indication information indicates one or more RBs associated with the rate matching pattern, and the second indication information indicates one or more subcarriers in the one or more RBs associated with the rate matching pattern.

Based on this possible design, different indication information may be used to separately indicate an RB and a subcarrier, to provide a feasible solution for designing the configuration information of the rate matching pattern.

In a possible design, the first indication information is a bitmap, and each bit in the bitmap indicates whether an RB corresponding to the bit belongs to the rate matching pattern.

Based on this possible design, a feasible solution is provided for designing the first indication information. It may be understood that the bitmap is a representation form of the first indication information, and the first indication information may alternatively be in any other representation form that can indicate one or more RBs associated with the rate matching pattern. This is not limited.

In a possible design, for each rate matching pattern, the second indication information indicates a subcarrier pattern jointly associated with all RBs associated with the rate matching pattern, where the subcarrier pattern includes one or more subcarriers in one RB.

Based on this possible design, each of all RBs associated with a same rate matching pattern is associated with a same subcarrier pattern. The second indication information may indicate, by indicating one subcarrier pattern, one or more subcarriers associated with the rate matching pattern, so that signaling overheads can be reduced.

In a possible design, for each rate matching pattern, the second indication information indicates subcarrier patterns respectively associated with all RBs associated with the rate matching pattern, where each subcarrier pattern includes one or more subcarriers in one RB.

Based on this possible design, a subcarrier pattern associated with each RB is separately indicated. Subcarrier patterns associated with any two of all RBs associated with a same rate matching pattern may be the same or may be different. The second indication information may indicate the subcarrier pattern associated with each RB, thereby improving flexibility in indicating a subcarrier associated with the rate matching pattern and improving communication performance.

In a possible design, configuration information of each rate matching pattern includes third indication information, where the third indication information indicates one or more RBs associated with the rate matching pattern and one or more subcarriers associated with the one or more RBs.

Based on this possible design, alternatively, the same indication information may be used to indicate an RB and a subcarrier, to provide another feasible solution for designing the configuration information of the rate matching pattern.

In a possible design, the third indication information includes N*M bits, N is a quantity of RBs corresponding to the third indication information, each RB corresponds to M bits, and the M bits corresponding to each RB indicate whether the RB corresponding to the M bits belongs to the rate matching pattern and a subcarrier pattern associated with the RB.

In a possible design, a first value of the M bits indicates that the RB corresponding to the M bits does not belong to the rate matching pattern; or a second value of the M bits indicates that the RB corresponding to the M bits belongs to the rate matching pattern, and that the RB is associated with a first subcarrier pattern; or a third value of the M bits indicates that the RB corresponding to the M bits belongs to the rate matching pattern, and that the RB is associated with a second subcarrier pattern; or a fourth value of the M bits indicates that the RB corresponding to the M bits belongs to the rate matching pattern, and that the RB is associated with a third subcarrier pattern; or a fifth value of the M bits indicates that the RB corresponding to the M bits belongs to the rate matching pattern, and that the RB is associated with a fourth subcarrier pattern.

Based on this possible design, a plurality of feasible solutions are provided for designing values of the M bits.

In a possible design, the subcarrier pattern is one of the following subcarrier patterns: a first subcarrier pattern, where the first subcarrier pattern includes all subcarriers in one RB; a second subcarrier pattern, where the second subcarrier pattern includes first, third, fifth, seventh, ninth, and eleventh subcarriers in one RB; a third subcarrier pattern, where the third subcarrier pattern includes first, second, seventh, and eighth subcarriers in one RB; and a fourth subcarrier pattern, where the fourth subcarrier pattern includes first, second, third, fourth, seventh, eighth, ninth, and tenth subcarriers in one RB.

Based on this possible design, a frequency domain resource of a rate matching pattern of the first RAT may be defined with reference to a frequency domain resource design of a DMRS of a second channel of a second RAT. Therefore, it is ensured that when spectrum sharing is performed between the first RAT and the second RAT, the first channel of the first RAT is not transmitted on a frequency domain resource of the DMRS of the second channel of the second RAT, or the second channel of the second RAT is not transmitted on a frequency domain resource of a DMRS of the first channel of the first RAT. In this way, DMRS orthogonality is maintained, and communication performance is improved.

In a possible design, the configuration information of each rate matching pattern further includes fourth indication information, where the fourth indication information indicates a time domain periodicity of the rate matching pattern and a time domain resource pattern in the periodicity.

In a possible design, the configuration information of each rate matching pattern may include tenth indication information, and the tenth indication information indicates a symbol associated with the rate matching pattern in one or more slots/subframes.

In a possible design, a candidate value of the time domain periodicity includes one or more of the following: 1, 2, 4, 5, 8, 10, 20, 40, 80, 160, or 320 time units. Each time unit includes one or more slots or subframes corresponding to the rate matching pattern. For example, each time unit may include one or more slots/subframes corresponding to the tenth indication information.

Based on the foregoing three possible designs, a time domain resource of the rate matching pattern of the first RAT may be defined with reference to a time domain resource design of the DMRS of the second channel of the second RAT. Therefore, it is ensured that when spectrum sharing is performed between the first RAT and the second RAT, the first channel of the first RAT is not transmitted on a time domain resource of the DMRS of the second channel of the second RAT, or the second channel of the second RAT is not transmitted on a time domain resource of the DMRS of the first channel of the first RAT. In this way, DMRS orthogonality is maintained, and communication performance is improved.

In a possible design, the rate matching pattern is a rate matching pattern dedicated to a bandwidth part BWP; or the rate matching pattern is a common rate matching pattern of a cell.

Based on this possible design, if a rate matching pattern is configured for a BWP, the rate matching pattern takes effect for the associated BWP, or in other words, the rate matching pattern takes effect for a first channel on the associated BWP. If a rate matching pattern is configured for a serving cell, the rate matching pattern may take effect for all BWPs of the serving cell, or in other words, the rate matching pattern takes effect for first channels on all BWPs of the serving cell.

In a possible design, the method further includes: receiving fifth indication information from the network device, where the fifth indication information indicates an effective rate matching pattern in the one or more rate matching patterns.

In a possible design, the one or more subcarriers indicated by the first information include all subcarriers in one RB; or the one or more subcarriers indicated by the first information include first, third, fifth, seventh, ninth, and eleventh subcarriers in one RB; or the one or more subcarriers indicated by the first information include first, second, seventh, and eighth subcarriers in one RB; or the one or more subcarriers indicated by the first information include first, second, third, fourth, seventh, eighth, ninth, and tenth subcarriers in one RB.

In a possible design, the time domain resource and the frequency domain resource are determined based on the demodulation reference signal DMRS of the second channel of the second RAT, where the second channel is a physical uplink shared channel or a physical downlink shared channel.

Based on this possible design, the time domain resource and the frequency domain resource of the rate matching pattern of the first RAT may be defined with reference to the time-frequency resource design of the DMRS of the second channel of the second RAT. Therefore, it is ensured that when spectrum sharing is performed between the first RAT and the second RAT, the first channel of the first RAT is not transmitted on a time-frequency resource of the DMRS of the second channel of the second RAT, or the second channel of the second RAT is not transmitted on a time-frequency resource of the DMRS of the first channel of the first RAT. In this way, DMRS orthogonality is maintained, and communication performance is improved.

According to a second aspect, this application provides a communication method. The method may be performed by a network device. Unless otherwise specified, the "network device" in this application may be the network device itself, or may be a component (for example, a processor, a chip, or a chip system) in the network device, or may be a logical module or software that can implement all or some functions of the network device. The method is applied to a first RAT, and the method includes: determining first information; and sending the first information to a terminal device, where the first information indicates a time domain resource and a frequency domain resource that are not for first channel transmission, the frequency domain resource indicated by the first information as not for first channel transmission includes one or more subcarriers in one or more resource blocks RBs that are indicated by the first information as not for first channel transmission, and the first channel is a physical uplink shared channel or a physical downlink shared channel.

Based on the second aspect, the network device may indicate, to the terminal device by using the first information, the time domain resource and the frequency domain resource that are not for first channel transmission, to avoid a signal collision, and improve communication system performance when spectrum sharing is performed between different communication systems.

In a possible design, the first information includes configuration information of one or more rate matching patterns, where a time-frequency resource associated with the rate matching pattern is the time domain resource and the frequency domain resource that are not for first channel transmission.

Based on this possible design, the network device may configure, for the terminal device based on a rate matching mechanism and by using a rate matching pattern, the time domain resource and the frequency domain resource that are not for first channel transmission.

In a possible design, the method further includes: sending fifth indication information to the terminal device, where the fifth indication information indicates an effective rate matching pattern in the one or more rate matching patterns.

It may be understood that, for descriptions of the first information in the second aspect, refer to related descriptions of the first information in the first aspect or any possible design of the first aspect. Details are not described herein again.

According to a third aspect, this application provides a communication method. The method may be performed by a terminal device. Unless otherwise specified, the "terminal device" in this application may be the terminal device itself, or may be a component (for example, a processor, a chip, or a chip system) in the terminal device, or may be a logical module or software that can implement all or some functions of the terminal device. The method is applied to a first RAT, and the method includes: receiving second information from a network device, where the second information may include configuration information of one or more demodulation reference signals DMRSs of a second channel of a second RAT, and the second channel is a physical uplink shared channel or a physical downlink shared channel; and determining, based on the second information, a time-frequency resource associated with the second information, where the time-frequency resource associated with the second information is not for first channel transmission of the first RAT, and the first channel is a physical uplink shared channel or a physical downlink shared channel.

Based on the third aspect, the network device may directly configure, for the terminal device by using the second information, configuration information of a DMRS on which rate matching needs to be performed, and the terminal device determines a time-frequency resource of the DMRS based on the configuration information of the DMRS, to determine the time-frequency resource that is not for first channel transmission of the first RAT. In other words, when spectrum sharing is performed between the first RAT and the second RAT, the first channel of the first RAT and the second channel of the second RAT may be transmitted in a time division multiplexing manner, and the first channel of the first RAT is muted on the time-frequency resource of the DMRS of the second channel of the second RAT, or in other words, no data of the first channel of the first RAT is sent on the time-frequency resource of the DMRS of the second channel of the second RAT. In this way, interference caused by data transmission of the first channel of the first RAT to DMRS transmission of the second channel of the second RAT is avoided, orthogonality is maintained between a DMRS of the first channel of the first RAT and the DMRS of the second channel of the second RAT, and communication performance is improved.

In a possible design, configuration information of each DMRS includes at least one of the following: a DMRS type, a quantity of DMRS symbols, a DMRS time domain position, a DMRS frequency domain resource, and a DMRS code division multiplexing CDM group without data.

Based on this possible design, a plurality of feasible solutions are provided for designing the configuration information of the DMRS.

In a possible design, the method further includes: receiving sixth indication information from the network device, where the sixth indication information indicates configuration information of a DMRS that takes effect in the configuration information of the one or more DMRSs.

In a possible design, in the configuration information of the one or more DMRSs, configuration information of at least one DMRS includes seventh indication information, where the seventh indication information indicates that a time-frequency resource associated with the DMRS is not for first channel transmission of the first RAT.

Based on this possible design, the DMRS may be extended. For example, two types of DMRSs may be defined in the first RAT, and a first type of DMRS is used to transmit and demodulate the first channel. A function of a second type of DMRS is different from that of the first type of DMRS. A time-frequency resource of the second type of DMRS is neither used to transmit the first channel nor used to demodulate the first channel, and is only used to define the time-frequency resource that is not for first channel transmission of the first RAT. For the second type of DMRS, if the first channel is a PDSCH, the terminal device does not make any assumption about a signal transmitted on the time-frequency resource of this type of DMRS; or if the first channel is a PUSCH, the terminal device may not send this type of DMRS. In the configuration information of the one or more DMRSs, configuration information of at least one DMRS includes the seventh indication information, and the DMRS corresponding to the seventh indication information is the foregoing second type of DMRS.

According to a fourth aspect, this application provides a communication method. The method may be performed by a network device. Unless otherwise specified, the "network device" in this application may be the network device itself, or may be a component (for example, a processor, a chip, or a chip system) in the network device, or may be a logical module or software that can implement all or some functions of the network device. The method is applied to a first RAT, and the method includes: determining second information; and sending the second information to a terminal device, where the second information includes configuration information of one or more demodulation reference signals DMRSs of a second channel of a second RAT, the second channel is a physical uplink shared channel or a physical downlink shared channel, a time-frequency resource associated with the second information is not for first channel transmission of a first RAT, and the first channel is a physical uplink shared channel or a physical downlink shared channel.

Based on the fourth aspect, the network device may directly configure, for the terminal device by using the second information, configuration information of a DMRS on which rate matching needs to be performed, and the terminal device determines a time-frequency resource of the DMRS based on the configuration information of the DMRS, to determine the time-frequency resource that is not for first channel transmission of the first RAT. In other words, when spectrum sharing is performed between the first RAT and the second RAT, the first channel of the first RAT and the second channel of the second RAT may be transmitted in a time division multiplexing manner, and the first channel of the first RAT is muted on the time-frequency resource of the DMRS of the second channel of the second RAT, or in other words, no data of the first channel of the first RAT is sent on the time-frequency resource of the DMRS of the second channel of the second RAT. In this way, interference caused by data transmission of the first channel of the first RAT to DMRS transmission of the second channel of the second RAT is avoided, orthogonality is maintained between a DMRS of the first channel of the first RAT and the DMRS of the second channel of the second RAT, and communication performance is improved.

In a possible design, the method further includes: sending sixth indication information to the terminal device, where the sixth indication information indicates configuration information of a DMRS that takes effect in the configuration information of the one or more DMRSs.

It may be understood that, for descriptions of the second information in the fourth aspect, refer to related descriptions of the second information in the third aspect or any possible design of the third aspect. Details are not described herein again.

According to a fifth aspect, this application provides a communication method. The method may be performed by a terminal device. Unless otherwise specified, the "terminal device" in this application may be the terminal device itself, or may be a component (for example, a processor, a chip, or a chip system) in the terminal device, or may be a logical module or software that can implement all or some functions of the terminal device. The method is applied to a first RAT, and the method includes: receiving eighth indication information from a network device, where the eighth indication information indicates a first demodulation reference signal DMRS port set, the first DMRS port set is used for a first channel of the first RAT, and the first channel is a physical uplink shared channel or a physical downlink shared channel; receiving ninth indication information from the network device, where the ninth indication information indicates a reference frequency position corresponding to a DMRS of the first channel of the first RAT, and the reference frequency position is a start frequency position for generating the DMRS of the first channel of the first RAT; and based on the eighth indication information and the ninth indication information, receiving the DMRS of the first channel of the first RAT by using one or more DMRS ports in the first DMRS port set, where the first channel is a physical downlink shared channel; or sending the DMRS of the first channel of the first RAT by using one or more DMRS ports in the first DMRS port set, where the first channel is a physical uplink shared channel.

Based on the fifth aspect, the network device may indicate the reference frequency position to the terminal device, to ensure that the first RAT and a second RAT use a same base sequence on a same time-frequency resource, thereby improving communication system performance. In addition, the network device may further indicate the first DMRS port set to the terminal device, so that the terminal device receives or sends the DMRS of the first channel of the first RAT by using the one or more DMRS ports in the first DMRS port set.

In a possible design, any DMRS port in the first DMRS port set is associated with 2*Q resource blocks RBs, where Q is a positive integer.

Based on this possible design, frequency domain extension may be performed on the DMRS port, to improve communication performance.

In a possible design, the first DMRS port set includes three code division multiplexing CDM groups, and each CDM group includes one or more DMRS ports in the first DMRS port set, where any DMRS port in a first CDM group is associated with first, second, seventh, and eighth subcarriers of each of the 2*Q RBs, any DMRS port in a second CDM group is associated with third, fourth, ninth, and tenth subcarriers of each of the 2*Q RBs, and any DMRS port in a third CDM group is associated with fifth, sixth, eleventh, and twelfth subcarriers of each of the 2*Q RBs.

Based on this possible design, when frequency domain extension is performed on the DMRS port, an association relationship between the DMRS port and a subcarrier may be shown above, to provide a feasible method for designing the subcarrier associated with the DMRS port.

In a possible design, any DMRS port in the first DMRS port set is associated with a frequency domain orthogonal cover code OCC whose length is 8*Q.

Based on this possible design, frequency domain extension may be performed by using an OCC with a longer length in frequency domain.

In a possible design, the first DMRS port set is associated with 4*P time domain symbols, where P is a positive integer.

Based on this possible design, time domain extension may also be performed on the DMRS port, to improve communication performance.

In a possible design, any DMRS port in the first DMRS port set is associated with two of the 4*P time domain symbols.

In a possible design, the first DMRS port set includes 2*P DMRS port subsets, each DMRS port subset includes one or more DMRS ports in the first DMRS port set, and each DMRS port subset is associated with two of the 4*P time domain symbols.

In a possible design, any DMRS port in the first DMRS port set is associated with a time domain OCC whose length is 2.

In a possible design, any DMRS port in the first DMRS port set is associated with all of the 4*P time domain symbols.

In a possible design, any DMRS port in the first DMRS port set is associated with a time domain OCC whose length is 4*P.

Based on the foregoing five possible designs, a plurality of feasible solutions are provided for designing an association relationship between a DMRS port and a time domain symbol. More DMRS ports may be supported by increasing a quantity of time domain symbols corresponding to the DMRS ports.

In a possible design, the ninth indication information includes an absolute radio frequency channel number corresponding to the reference frequency position; or the ninth indication information includes a common resource block CRB index corresponding to the reference frequency position.

In a possible design, a base sequence corresponding to a DMRS port in the first DMRS port set is the same as a base sequence corresponding to a DMRS port in a second DMRS port set, where the second DMRS port set is used for a second channel of a second RAT, and the second channel is a physical uplink shared channel or a physical downlink shared channel.

In a possible design, the reference frequency position corresponding to the DMRS of the first channel of the first RAT is the same as a reference frequency position corresponding to a DMRS of the second channel of the second RAT.

Based on the foregoing three possible designs, the reference frequency position corresponding to the DMRS of the first channel of the first RAT may not be fixedly a subcarrier 0 of a CRB 0. Instead, the network device may indicate, by using the ninth indication information, the reference frequency position corresponding to the DMRS of the first channel of the first RAT, to ensure that the reference frequency position corresponding to the DMRS of the first channel of the first RAT is the same as the reference frequency position corresponding to the DMRS of the second channel of the second RAT, and ensure that on a same time-frequency resource, the base sequence used for the DMRS of the first channel of the first RAT and the base sequence used for the DMRS of the second channel of the second RAT are the same. In this way, orthogonality can be maintained between the DMRS of the first channel of the first RAT and the DMRS of the second channel of the second RAT, and communication system performance is improved.

According to a sixth aspect, this application provides a communication method. The method may be performed by a network device. Unless otherwise specified, the "network device" in this application may be the network device itself, or may be a component (for example, a processor, a chip, or a chip system) in the network device, or may be a logical module or software that can implement all or some functions of the network device. The method is applied to a first RAT, and the method includes: sending eighth indication information to a terminal device, where the eighth indication information indicates a first demodulation reference signal DMRS port set, the first DMRS port set is used for a first channel of the first RAT, and the first channel is a physical uplink shared channel or a physical downlink shared channel; sending ninth indication information to the terminal device, where the ninth indication information indicates a reference frequency position corresponding to a DMRS of the first channel of the first RAT, and the reference frequency position is a start frequency position for generating the DMRS of the first channel of the first RAT; and based on the eighth indication information and the ninth indication information, receiving the DMRS of the first channel of the first RAT by using one or more DMRS ports in the first DMRS port set, where the first channel is a physical uplink shared channel; or sending the DMRS of the first channel of the first RAT by using one or more DMRS ports in the first DMRS port set, where the first channel is a physical downlink shared channel.

Based on the sixth aspect, the network device may indicate the reference frequency position to the terminal device, to ensure that the first RAT and a second RAT use a same base sequence on a same time-frequency resource, thereby improving communication system performance. In addition, the network device may further indicate the first DMRS port set to the terminal device, so that the terminal device receives or sends the DMRS of the first channel of the first RAT by using the one or more DMRS ports in the first DMRS port set.

It may be understood that, for descriptions of the first DMRS port set and the ninth indication information in the sixth aspect, refer to related descriptions of the first DMRS port set and the ninth indication information in the fifth aspect or any possible design of the fifth aspect. Details are not described herein again.

According to a seventh aspect, this application provides a communication apparatus. The communication apparatus may be used in the terminal device in the first aspect or the third aspect or the fifth aspect, to implement the function performed by the terminal device. The communication apparatus may be the terminal device, or may be a chip, a chip system, a system on chip, or the like of the terminal device. The communication apparatus may perform, by hardware or by hardware executing corresponding software, the function performed by the terminal device. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

For example, the transceiver module is configured to receive first information from a network device; and the processing module is configured to determine, based on the first information, a time domain resource and a frequency domain resource that are not for first channel transmission. The first information indicates the time domain resource and the frequency domain resource that are not for first channel transmission. The frequency domain resource indicated by the first information as not for first channel transmission includes one or more subcarriers in one or more resource blocks RBs that are indicated by the first information as not for first channel transmission. The first channel is a physical uplink shared channel or a physical downlink shared channel.

For another example, the transceiver module is configured to receive second information from a network device, where the second information may include configuration information of one or more demodulation reference signals DMRSs of a second channel of a second RAT, and the second channel is a physical uplink shared channel or a physical downlink shared channel; and the processing module is configured to determine, based on the second information, a time-frequency resource associated with the second information, where the time-frequency resource associated with the second information is not for first channel transmission of a first RAT, and the first channel is a physical uplink shared channel or a physical downlink shared channel.

For still another example, the transceiver module is configured to receive eighth indication information from a network device, where the eighth indication information indicates a first demodulation reference signal DMRS port set, the first DMRS port set is used for a first channel of a first RAT, and the first channel is a physical uplink shared channel or a physical downlink shared channel; the transceiver module is further configured to receive ninth indication information from the network device, where the ninth indication information indicates a reference frequency position corresponding to a DMRS of the first channel of the first RAT, and the reference frequency position is a start frequency position for generating the DMRS of the first channel of the first RAT; and the transceiver module is further configured to receive, based on the eighth indication information and the ninth indication information, the DMRS of the first channel of the first RAT by using one or more DMRS ports in the first DMRS port set, where the first channel is a physical downlink shared channel; or the transceiver module is further configured to send the DMRS of the first channel of the first RAT by using one or more DMRS ports in the first DMRS port set, where the first channel is a physical uplink shared channel.

Optionally, the transceiver module and the processing module of the communication apparatus in the seventh aspect may further perform corresponding functions in the first aspect or any possible design of the first aspect, or perform corresponding functions in the third aspect or any possible design of the third aspect, or perform corresponding functions in the fifth aspect or any possible design of the fifth aspect. For details, refer to detailed descriptions in the method examples. For beneficial effects that can be achieved, refer to the foregoing related content. Details are not described herein again.

According to an eighth aspect, this application provides a communication apparatus. The communication apparatus may be used in the network device in the second aspect or the fourth aspect or the sixth aspect, to implement the function performed by the network device. The communication apparatus may be the network device, or may be a chip, a chip system, a system on chip, or the like of the network device. The communication apparatus may perform, by hardware or by hardware executing corresponding software, the function performed by the network device. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

For example, the processing module is configured to determine first information; and the transceiver module is configured to send the first information to a terminal device, where the first information indicates a time domain resource and a frequency domain resource that are not for first channel transmission, the frequency domain resource indicated by the first information as not for first channel transmission includes one or more subcarriers in one or more resource blocks RBs that are indicated by the first information as not for first channel transmission, and the first channel is a physical uplink shared channel or a physical downlink shared channel.

For another example, the processing module is configured to determine second information; and the transceiver module is configured to send the second information to a terminal device, where the second information includes configuration information of one or more demodulation reference signals DMRSs of a second channel of a second RAT, the second channel is a physical uplink shared channel or a physical downlink shared channel, a time-frequency resource associated with the second information is not for first channel transmission of a first RAT, and the first channel is a physical uplink shared channel or a physical downlink shared channel.

For still another example, the transceiver module is configured to send eighth indication information to a terminal device, where the eighth indication information indicates a first demodulation reference signal DMRS port set, the first DMRS port set is used for a first channel of a first RAT, and the first channel is a physical uplink shared channel or a physical downlink shared channel; the transceiver module is further configured to send ninth indication information to the terminal device, where the ninth indication information indicates a reference frequency position corresponding to a DMRS of the first channel of the first RAT, and the reference frequency position is a start frequency position for generating the DMRS of the first channel of the first RAT; and the transceiver module is further configured to receive, based on the eighth indication information and the ninth indication information, the DMRS of the first channel of the first RAT by using one or more DMRS ports in the first DMRS port set, where the first channel is a physical uplink shared channel; or the transceiver module is further configured to send the DMRS of the first channel of the first RAT by using one or more DMRS ports in the first DMRS port set, where the first channel is a physical downlink shared channel.

Optionally, the transceiver module and the processing module of the communication apparatus in the eighth aspect may further perform corresponding functions in the second aspect or any possible design of the second aspect, or perform corresponding functions in the fourth aspect or any possible design of the fourth aspect, or perform corresponding functions in the sixth aspect or any possible design of the sixth aspect. For details, refer to detailed descriptions in the method examples. For beneficial effects that can be achieved, refer to the foregoing related content. Details are not described herein again.

According to a ninth aspect, this application provides a communication apparatus. The communication apparatus includes one or more processors. The one or more processors are configured to run a computer program or instructions. When the one or more processors execute the computer program or the instructions, the communication method according to any one of the first aspect to the sixth aspect is performed.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with other modules outside the communication apparatus.

According to a tenth aspect, this application provides a communication apparatus. The communication apparatus includes an interface circuit and a logic circuit. The interface circuit is configured to input and/or output information. The logic circuit is configured to perform the communication method according to any one of the first aspect to the sixth aspect, and perform processing based on the information and/or generate the information.

According to an eleventh aspect, this application provides a computer-readable storage medium. The computer-readable storage medium stores computer instructions or a program. When the computer instructions or the program is run on a computer, the communication method according to any one of the first aspect to the sixth aspect is performed.

According to a twelfth aspect, this application provides a computer program product including computer instructions. When the computer program product is run on a computer, the communication method according to any one of the first aspect to the sixth aspect is performed.

According to a thirteenth aspect, this application provides a computer program. When the computer program is run on a computer, the communication method according to any one of the first aspect to the sixth aspect is performed.

According to a fourteenth aspect, this application provides a chip, including a processor. The processor is coupled to a memory, the memory is configured to store a program or instructions, and when the program or the instructions are executed by the processor, the communication method according to any one of the first aspect to the sixth aspect is performed.

For technical effects brought by any design of the ninth aspect to the fourteenth aspect, refer to the technical effects brought by any one of the first aspect to the sixth aspect. Details are not described again.

According to a fifteenth aspect, this application provides a communication system. The communication system may include a communication apparatus configured to perform the first aspect or any possible design of the first aspect and a communication apparatus configured to perform the second aspect or any possible design of the second aspect, or include a communication apparatus configured to perform the third aspect or any possible design of the third aspect and a communication apparatus configured to perform the fourth aspect or any possible design of the fourth aspect, or include a communication apparatus configured to perform the fifth aspect or any possible design of the fifth aspect and a communication apparatus configured to perform the sixth aspect or any possible design of the sixth aspect.

### BRIEF DESCRIPTION OF DRAWINGS

FIG. 1 is a diagram illustrating spectrum sharing according to an embodiment of this application;
FIG. 2 is a diagram illustrating dynamic spectrum sharing according to an embodiment of this application;
FIG. 3 is a diagram illustrating rate matching at an RE-level granularity according to an embodiment of this application;
FIG. 4 is a diagram illustrating rate matching at an RB/symbol-level granularity according to an embodiment of this application;
FIG. 5 is a diagram illustrating spatial multiplexing according to an embodiment of this application;
FIG. 6 is a diagram illustrating a communication system according to an embodiment of this application;
FIG. 7 is a diagram illustrating a communication system according to an embodiment of this application;
FIG. 8 is a diagram illustrating a communication apparatus according to an embodiment of this application;
FIG. 9 is a diagram illustrating a communication method according to an embodiment of this application;
FIG. 10 is a diagram illustrating a structure of a DMRS according to an embodiment of this application;
FIG. 11 is a diagram illustrating a subcarrier pattern according to an embodiment of this application;
FIG. 12 is a diagram illustrating time-frequency resources for DMRSs of a first channel of a first RAT and a second channel of a second RAT according to an embodiment of this application;
FIG. 13 is a diagram illustrating a communication method according to an embodiment of this application;
FIG. 14 is a diagram illustrating a communication method according to an embodiment of this application;
FIG. 15A and FIG. 15B are diagrams illustrating a first DMRS port set and a second DMRS port set according to an embodiment of this application;
FIG. 16 is a diagram illustrating a reference frequency position corresponding to a DMRS of a second channel of a 5G communication system according to an embodiment of this application;
FIG. 17 is a diagram illustrating reference frequency positions corresponding to a DMRS of a second channel of a 5G communication system and a DMRS of a first channel of a 6G communication system according to an embodiment of this application;
FIG. 18 is a diagram illustrating time-frequency resources for a DMRS of a first channel of a first RAT and a DMRS of a second channel of a second RAT according to an embodiment of this application;
FIG. 19 is a diagram illustrating time-frequency resources for a DMRS of a first channel of a first RAT and a DMRS of a second channel of a second RAT according to an embodiment of this application;
FIG. 20 is a diagram illustrating time-frequency resources for a DMRS of a first channel of a 6G communication system and a DMRS of a second channel of a 5G communication system according to an embodiment of this application;
FIG. 21 is a diagram illustrating time-frequency resources for a DMRS of a first channel of a 6G communication system and a DMRS of a second channel of a 5G communication system according to an embodiment of this application;
FIG. 22 is a diagram illustrating a communication apparatus according to an embodiment of this application; and
FIG. 23 is a diagram of a communication apparatus according to an embodiment of this application.

### DESCRIPTION OF EMBODIMENTS

Before embodiments of this application are described, technical terms used in embodiments of this application are described.

Spectrum sharing: Different communication systems may be deployed on a same spectrum, to improve spectrum resource utilization.

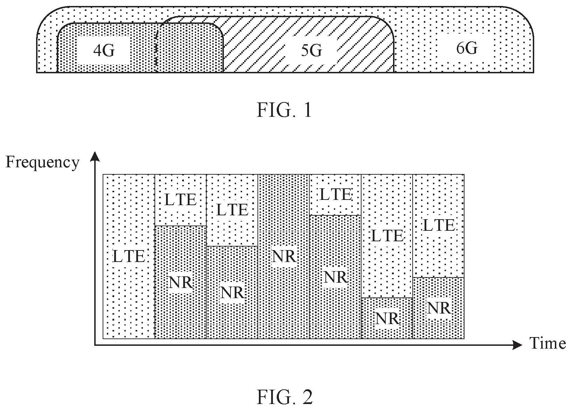

For example, as shown in FIG. 1, radio access technologies (radio access technologies, RATs) such as a future communication system (for example, a sixth generation (sixth generation, 6G) communication system), a 5G new radio (new radio, NR) communication system (or referred to as a 5G communication system or an NR communication system), a 4G long term evolution (long term evolution, LTE) communication system (or referred to as a 4G communication system or an LTE communication system), and even a 3G communication system may be deployed on a same spectrum.

The NR communication system and the LTE communication system are used as examples. The NR communication system and the LTE communication system may implement spectrum sharing in a dynamic spectrum sharing (dynamic spectrum sharing, DSS) manner. As shown in FIG. 2, the NR communication system and the LTE communication system may dynamically use frequency resources in a shared spectrum for data transmission, instead of semi-statically allocating frequency resources in the shared spectrum to the NR communication system and the LTE communication system. In addition, when dynamic spectrum sharing is performed between the NR communication system and the LTE communication system, frequency division multiplexing or time division multiplexing is performed between a signal of the NR communication system and a signal of the LTE communication system, that is, signals of two RATs are sent by using different frequency resources or time resources. Both a data channel and a control channel may be implemented in a manner of dynamic scheduling by a network device.

However, in the LTE communication system, some downlink reference signals or downlink channels, for example, a cell reference signal (cell reference signal, CRS), a primary synchronization signal (primary synchronization signal, PSS), a secondary synchronization signal (secondary synchronization signal, SSS), and a physical broadcast channel (physical broadcast channel, PBCH), are sent continuously (always-on) but not sent through dynamic scheduling by a network device. Based on this, a physical downlink shared channel (physical downlink shared channel, PDSCH) of the NR communication system collides with these downlink reference signals or downlink channels of the LTE communication system and causes interference. Consequently, transmission performance of these downlink reference signals or downlink channels of the LTE communication system is affected. To resolve this problem, a rate matching (rate matching, RM) mechanism is introduced into the NR communication system. To be specific, when the PDSCH of the NR communication system collides with a downlink reference signal or a downlink channel such as the CRS, the PSS, the SSS, or the PBCH of the LTE communication system, the PDSCH of the NR communication system is not transmitted on time-frequency resources of the downlink reference signal or the downlink channel such as the CRS, the PSS, the SSS, or the PBCH of the LTE communication system, and rate matching is performed for the PDSCH of the NR communication system on these time-frequency resources. Downlink rate matching mechanisms supported by the NR communication system vary depending on designs of downlink reference signals or downlink channels for which collisions are resolved.

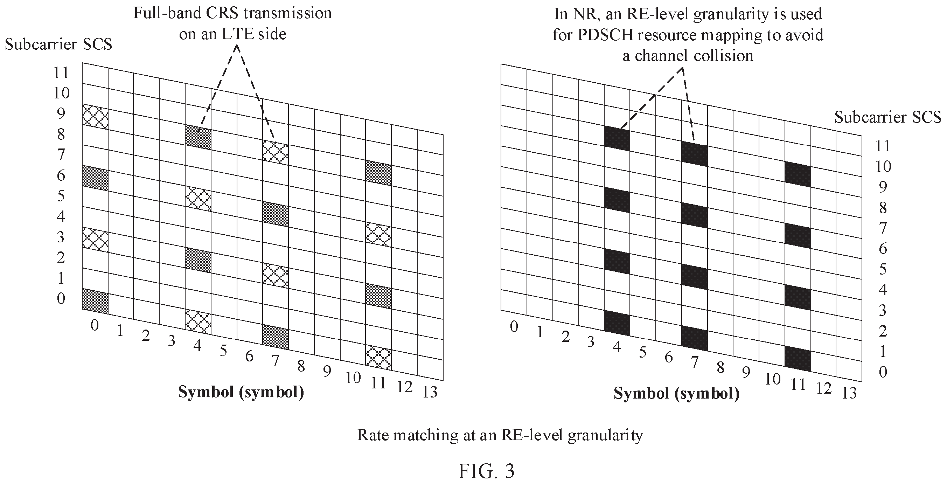

For the CRS of the LTE communication system, the CRS of the LTE communication system is not continuously mapped in frequency domain, but is mapped to one RE in every three resource elements (resource elements, REs). Therefore, as shown in FIG. 3, during resource mapping, the PDSCH of the NR communication system supports rate matching at an RE-level (RE-level) granularity, to avoid a collision with the CRS of the LTE communication system. In addition, a network device of the NR communication system may configure, for a terminal device of the NR communication system by using signaling, a related parameter of the CRS of the LTE communication system. The terminal device of the NR communication system may determine a time-frequency resource position of the CRS of the LTE communication system based on the related parameter of the CRS, to determine a time-frequency resource position at which rate matching needs to be performed during PDSCH resource mapping in the NR communication system.

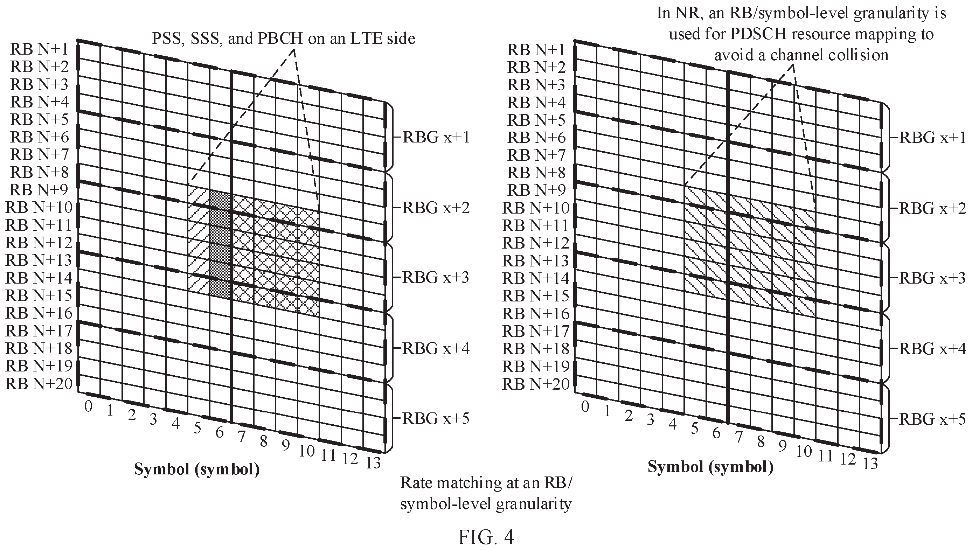

The PSS, the SSS, and the PBCH of the LTE communication system may occupy one or more orthogonal frequency division multiplexing symbols (orthogonal frequency division multiplexing OFDM symbols) in time domain, and occupy a plurality of resource blocks (resource blocks, RBs) in frequency domain. Therefore, as shown in FIG. 4, during resource mapping, the PDSCH of the NR communication system may support rate matching at an RB/symbol-level (RB/symbol-level) granularity, to avoid a collision with these signals/channels of the LTE communication system. In addition, different from the foregoing collision resolution manner for the CRS of the LTE communication system, the network device of the NR communication system does not directly configure related parameters of downlink reference signals or downlink channels such as the PSS, the SSS, and the PBCH of the LTE communication system for the terminal device of the NR communication system by using signaling, but notifies the terminal device of a time-frequency resource pattern for PDSCH rate matching in the NR communication system.

Specifically, the network device may configure one or more rate matching patterns used for the PDSCH. Configuration information of each rate matching pattern includes the following information: RBs (resourceBlocks), symbols corresponding to an RB (symbolsInResourceBlock), and a periodicity and pattern (periodicityAndPattern). resourceBlocks may be in an RB level bitmap (RB level bitmap) format, and each bit corresponds to one RB. When a value of a bit is '1', it indicates that an RB corresponding to the bit belongs to the rate matching pattern; otherwise, the RB corresponding to the bit does not belong to the rate matching pattern. symbolsInResourceBlock may be in a symbol level bitmap (symbol level bitmap) format. Each bit corresponds to one symbol in one slot (slot) or two slots. When a value of a bit is '1', it indicates that a symbol corresponding to the bit belongs to the rate matching pattern; otherwise, the symbol does not belong to the rate matching pattern. periodicityAndPattern may be in a bitmap format. For a pair of the RB level bitmap and the symbol level bitmap, periodicityAndPattern is used to configure a periodic time domain pattern, each bit corresponds to one unit, and the unit is equal to duration of the symbol level bitmap. When a value of a bit is '1', it indicates presence of a unit corresponding to the bit; otherwise, the unit is absent.

Optionally, the network device may further configure two rate matching pattern groups, where each rate matching pattern group may include one or more of a plurality of rate matching patterns, and the network device dynamically indicates, by using a rate matching indicator (rate matching indicator) field in scheduling downlink control information (downlink control information, DCI), which rate matching pattern in which rate matching pattern group takes effect.

In the foregoing description, the foregoing rate matching mechanism is introduced into the NR communication system, to resolve a signal collision between the LTE communication system and the NR communication system, and improve communication performance. However, the foregoing manner is not applicable to resolving a signal collision when another communication system performs spectrum sharing.

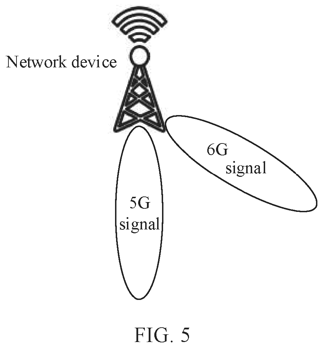

For example, for the NR communication system and the 6G communication system, when spectrum sharing is considered, in addition to frequency division multiplexing or time division multiplexing, a multiplexing manner with higher efficiency, that is, spatial multiplexing, may be further considered between signals of the two communication systems. Spatial multiplexing means that a plurality of signals are transmitted on a same time-frequency resource by using a plurality of spatially orthogonal channels. For example, as shown in FIG. 5, signal transmission may be implemented based on spatial multiplexing between the PDSCH or a physical uplink shared channel (physical uplink shared channel, PUSCH) of the NR communication system and a PDSCH/PUSCH of the 6G communication system. If a spatial multiplexing manner is used to resolve a signal collision problem between a signal of the 6G communication system and a signal of the NR communication system, and especially a collision between PDSCHs or physical uplink shared channels (physical uplink shared channels, PUSCHs) of the two communication systems, it needs to be ensured that a demodulation reference signal (demodulation reference signal, DMRS) of the PDSCH/PUSCH of the 6G communication system is orthogonal to a DMRS of the PDSCH/PUSCH of the NR communication system. Otherwise, the DMRS of the PDSCH/PUSCH of the NR communication system or the 6G communication system is subject to interference. Consequently, demodulation performance of the PDSCH/PUSCH of the NR communication system or the 6G communication system is degraded.

However, there is no solution to ensuring that DMRSs of two communication systems keep orthogonal. In addition, if the rate matching mechanism of the NR communication system is reused to resolve a collision between the PDSCH/PUSCH of the NR communication system and the PDSCH/PUSCH of the 6G communication system, the following problems also exist: ① Downlink rate matching, that is, a rate matching mechanism for the PDSCH, is defined in the NR communication system, but uplink rate matching is not supported. Therefore, a collision problem between a PUSCH of one RAT and a PUSCH/PDSCH of another RAT cannot be resolved. ② A rate matching pattern defined in the NR communication system is inconsistent with a pattern of the DMRS of the PDSCH/PUSCH, and the rate matching mechanism of the NR communication system cannot be directly reused.

Therefore, when spectrum sharing is performed between different communication systems, how to improve communication performance becomes a technical problem to be urgently resolved.

To resolve the foregoing technical problem, this application provides a communication method. In the method, a terminal device may receive first information from a network device, and determine, based on the first information, a time domain resource and a frequency domain resource that are not for first channel transmission. The first information indicates the time domain resource and the frequency domain resource that are not for first channel transmission. The frequency domain resource indicated by the first information as not for first channel transmission includes one or more subcarriers in one or more resource blocks RBs that are indicated by the first information as not for first channel transmission. The first channel is a physical uplink shared channel or a physical downlink shared channel.

In embodiments of this application, the terminal device may determine, based on the first information, the time domain resource and the frequency domain resource that are not for first channel transmission, to avoid a signal collision, and improve communication system performance when spectrum sharing is performed between different communication systems.

The following describes implementations of embodiments of this application in detail with reference to accompanying drawings in this specification.

The communication method provided in embodiments of this application may be applied to any communication system. The communication system may be a Third Generation Partnership Project (Third Generation Partnership Project, 3GPP) communication system, for example, an LTE system, or may be a 5G mobile communication system, a system with hybrid LTE and 5G networking, an NR communication system, an NR vehicle to everything (vehicle to everything, V2X) system, a device to device (device to device, D2D) communication system, a machine to machine (machine to machine, M2M) communication system, an Internet of Things (Internet of Things, IoT) system, a Narrowband Internet of Things (Narrowband Internet of Things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, enhanced mobile broadband (enhanced mobile broadband, eMBB), ultra-reliable and low-latency communication (ultra-reliable and low-latency communication, URLLC), enhanced machine-type communication (enhanced machine-type communication, eMTC), and various next-generation communication systems, for example, a 5.5G mobile communication system or a 6G communication system, or may be a non-terrestrial communication network (non-terrestrial network, NTN) system (for example, a satellite communication system) or a non-3GPP communication system. This is not limited.

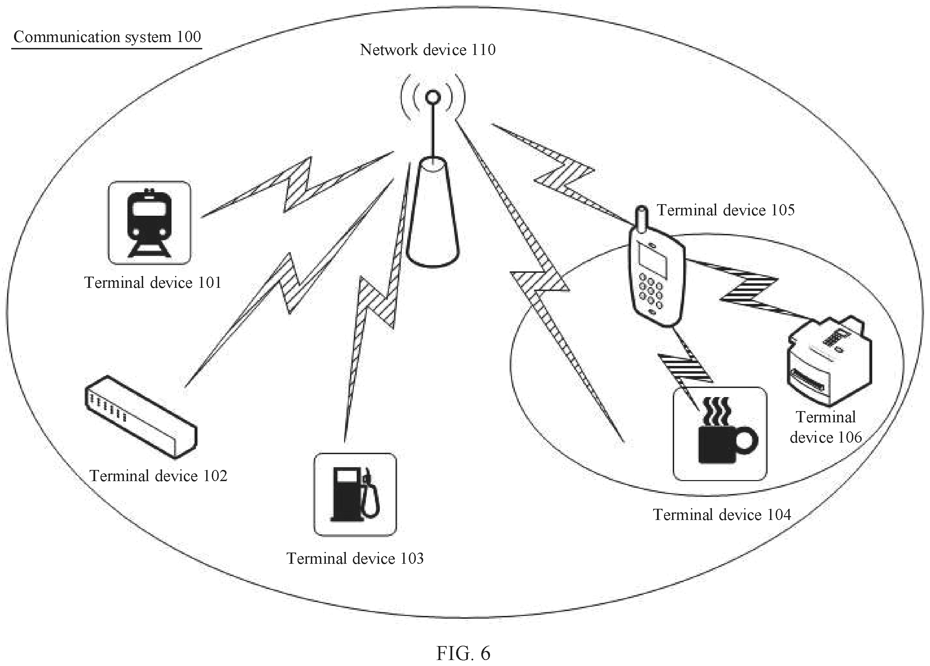

The following uses FIG. 6 as an example to describe a communication system provided in an embodiment of this application.

FIG. 6 is a diagram illustrating a communication system according to an embodiment of this application. As shown in FIG. 6, the communication system 100 may include at least one terminal device (for example, a terminal device 101 to a terminal device 106) and at least one network device (for example, a network device 110).

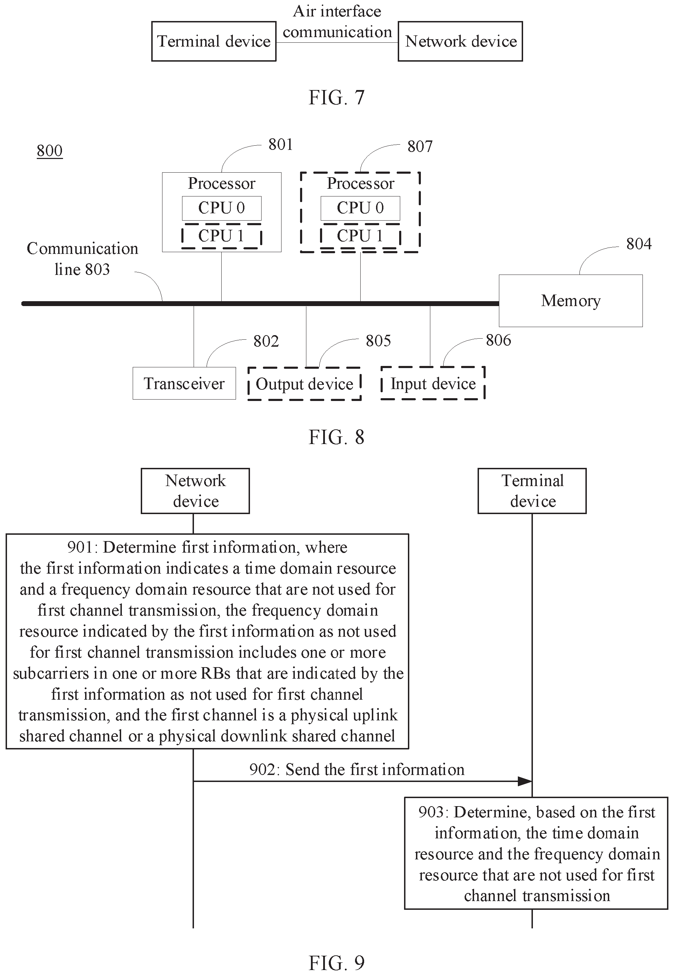

In FIG. 6, the terminal device may be located in beam/cell coverage of the network device, and the network device may provide a communication service for the terminal device. The terminal device may be connected to an air interface of the network device in a manner shown in FIG. 7. For example, the terminal device may perform air interface communication with the network device over an uplink or a downlink. For example, the terminal device may send uplink data to the network device by using a PUSCH in an uplink direction, and the network device may send downlink data to the terminal device by using a PDSCH in a downlink direction.

The terminal device in FIG. 6 may be a device with a wireless transceiver function or a chip or a chip system that can be disposed in the device, can allow a user to access a network, and is a device configured to provide voice and/or data connectivity for the user. The terminal device may also be referred to as user equipment (user equipment, UE), a subscriber unit (subscriber unit), a terminal (terminal), a mobile station (mobile station, MS), a mobile terminal (mobile terminal, MT), or the like.

For example, the terminal device in FIG. 6 may be a mobile phone (mobile phone), a tablet computer, or a computer with a wireless transceiver function. Alternatively, the terminal device may be a subscriber station, a mobile station, a remote station, a remote terminal device, a mobile terminal device, a user terminal device, a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a tablet computer (PAD), a handheld device with a wireless communication function, a computing device, a processing device connected to a wireless modem, a vehicle-mounted device, a wearable device, a terminal device in the Internet of Things, a home appliance, a virtual reality (virtual reality, VR) terminal, an augmented reality (augmented reality, AR) terminal, a wireless terminal in industrial control, a wireless terminal in autonomous driving, a wireless terminal in telemedicine, a wireless terminal in a smart grid, a wireless terminal in a smart city (smart city), a wireless terminal in a smart home (smart home), a vehicle having a vehicle-to-vehicle (vehicle-to-vehicle, V2V) communication capability, an intelligent connected vehicle, an unmanned aerial vehicle having a UAV to UAV (UAV to UAV, U2U) communication capability, a Wi-Fi terminal device (such as an in-vehicle terminal, a smartphone, or a PAD that has a function of connecting to a Wi-Fi access point (access point, AP)), a terminal device in a future network, a terminal device in a future evolved public land mobile network (public land mobile network, PLMN), or the like. This is not limited.

The network device in FIG. 6 may be any device that is deployed in an access network and that can perform wireless communication with a terminal device, or may be a chip or a chip system that may be disposed in the device, or may be a logical node or a logical module or a function implemented by software. The network device may be configured to implement functions such as a radio physical control function, resource scheduling and radio resource management, radio access control, and mobility management. Specifically, the network device may be a device supporting wired access, or may be a device supporting wireless access.

For example, the network device may include one or more access network (access network, AN) or radio access network (radio access network, RAN) nodes. The AN/RAN node may be a base station, a next-generation NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a Wi-Fi AP, or the like. The base station may be a 4G, 5G, 5.5G, or future 6G base station, or the like, and this is not limited. The Wi-Fi AP may be a Wi-Fi 5, Wi-Fi 6, or future Wi-Fi AP product, or the like, and this is not limited.

In another example, the network device may include a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack.

In still another example, alternatively, the network device may be a device including a central unit (central unit, CU) node, including a distributed unit (distributed unit, DU) node, or including a CU node and a DU node. For example, the network device may be divided into a CU and a DU from a perspective of logical functions. Some protocol layer functions are centrally controlled by the CU, and some or all of remaining protocol layer functions are distributed in the DU, and the CU centrally controls the DU. The CU and the DU may be separately disposed, or may be included in a same network element, for example, a BBU. Further, the central unit CU may be further divided into a control plane (CU-CP) and a user plane (CU-UP).

In still another example, the network device may alternatively be a radio unit (radio unit, RU) or a device including a CU, a DU, and an RU. The RU may be included in a radio frequency device or a radio frequency unit, for example, included in an RRU, an active antenna unit (active antenna unit, AAU), or a remote radio head (remote radio head, RRH).

It may be understood that in different systems, the CU (or the CU-CP and the CU-UP), the DU, or the RU may also have different names, but a person skilled in the art may understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

It may be understood that the terminal device and the network device in embodiments of this application each may be one or more chips, or may be a system on chip (system on chip, SoC), or the like. FIG. 6 is merely an example figure, and a quantity of devices included in FIG. 6 is not limited. Moreover, in addition to the devices shown in FIG. 6, the communication system may further include other devices, for example, may further include a wireless relay device and a wireless backhaul device. Names of the devices and links in FIG. 6 are not limited. In addition to the names shown in FIG. 6, the devices and the links may alternatively have other names. This is not limited.

During specific implementation, as shown in FIG. 6 or FIG. 7, for example, each terminal device or each network device may use a composition structure shown in FIG. 8 or include components shown in FIG. 8. FIG. 8 is a diagram of composition of a communication apparatus 800 according to an embodiment of this application. The communication apparatus 800 may be a terminal device, or a chip or a system on chip in the terminal device; or may be a network device, or a chip or a system on chip in the network device. As shown in FIG. 8, the communication apparatus 800 includes a processor 801, a transceiver 802, and a communication line 803.

Further, the communication apparatus 800 may further include a memory 804. The processor 801, the memory 804, and the transceiver 802 may be connected through the communication line 803.

The processor 801 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 801 may alternatively be another apparatus having a processing function, for example, a circuit, a component, or a software module. This is not limited.

The transceiver 802 is configured to communicate with another device or another communication network. The another communication network may be an Ethernet, a radio access network (radio access network, RAN), a wireless local area network (wireless local area network, WLAN), or the like. The transceiver 802 may be a module, a circuit, a transceiver, or any apparatus that can implement communication.

The communication line 803 is configured to transmit information between components included in the communication apparatus 800.

The memory 804 is configured to store instructions. The instructions may be a computer program.

The memory 804 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or the like. This is not limited.

It should be noted that the memory 804 may be independent of the processor 801, or may be integrated with the processor 801. The memory 804 may be configured to store instructions, program code, some data, or the like. The memory 804 may be located inside the communication apparatus 800, or may be located outside the communication apparatus 800. This is not limited. The processor 801 is configured to execute the instructions stored in the memory 804, to implement the method provided in the following embodiment of this application.

In an example, the processor 801 may include one or more CPUs, for example, a CPU 0 and a CPU 1 in FIG. 8.

In an optional implementation, the communication apparatus 800 includes a plurality of processors. For example, the communication apparatus 800 may further include a processor 807 in addition to the processor 801 in FIG. 8.

In an optional implementation, the communication apparatus 800 further includes an output device 805 and an input device 806. For example, the input device 806 is a keyboard, a mouse, a microphone, or a joystick, and the output device 805 is a display, or a speaker (speaker).

It should be noted that the communication apparatus 800 may be a desktop computer, a portable computer, a network server, a mobile phone, a tablet computer, a wireless terminal, an embedded device, a chip system, or a device having a structure similar to that in FIG. 8. In addition, the composition structure shown in FIG. 8 does not constitute a limitation on the communication apparatus. In addition to the components shown in FIG. 8, the communication apparatus may include more or fewer components than those shown in the figure, or some components may be combined, or different component arrangements may be used.

In embodiments of this application, the chip system may include a chip or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication system shown in FIG. 6 or FIG. 7, the following describes a communication method provided in an embodiment of this application with reference to FIG. 9, where a network device may be any network device in the communication system shown in FIG. 6 or FIG. 7, and a terminal device may be any terminal device in the communication system shown in FIG. 6 or FIG. 7. The network device or the terminal device described in the following embodiment may have the components shown in FIG. 8.

FIG. 9 is a flowchart of a communication method according to an embodiment of this application. As shown in FIG. 9, the method is applied to a first RAT, and the method may include the following steps.

Step 901: The network device determines first information.

Step 902: The network device sends the first information to the terminal device, and correspondingly, the terminal device receives the first information from the network device.

Step 903: The terminal device determines, based on the first information, a time domain resource and a frequency domain resource that are not for first channel transmission.

The first information may indicate the time domain resource and the frequency domain resource that are not for first channel transmission, and the frequency domain resource indicated by the first information as not for first channel transmission includes one or more subcarriers in one or more RBs that are indicated by the first information as not for first channel transmission. The first channel is a physical uplink shared channel or a physical downlink shared channel.

It may be understood that the network device is a network device of the first RAT, and the terminal device is a terminal device of the first RAT, and the first channel is a first channel of the first RAT.

The first RAT may be any one of the foregoing communication systems, for example, may be a future communication system (for example, a 6G communication system), or may be a 5G communication system. This is not limited.

For example, the network device may configure, for the terminal device based on a rate matching mechanism and by using a rate matching pattern, the time domain resource and the frequency domain resource that are not for first channel transmission. In other words, the first information may include configuration information of one or more rate matching patterns. After receiving the first information, the terminal device may determine the time domain resource and the frequency domain resource that are not for first channel transmission.

A time-frequency resource associated with each rate matching pattern is the time domain resource and the frequency domain resource that are not for first channel transmission, or in other words, the time-frequency resource associated with each rate matching pattern is unavailable for the first channel.

The following uses a frequency domain resource as an example to describe configuration information of each rate matching pattern in detail with reference to the following two possible designs.

In a first possible design, the configuration information of each rate matching pattern includes first indication information and second indication information.

The first indication information may indicate one or more RBs associated with the rate matching pattern, and the second indication information may indicate one or more subcarriers in the one or more RBs associated with the rate matching pattern.

For the first indication information, in a possible implementation, the first indication information of each rate matching pattern may be a bitmap, and each bit in the bitmap indicates whether an RB corresponding to the bit belongs to the rate matching pattern.

The bitmap may include Y bits, the Y bits may be in a one-to-one correspondence with Y RBs, and Y is a positive integer. Y may be predefined in a protocol, or may be defined by the network device. This is not limited. A value of a bit may be set to 0, indicating that an RB corresponding to the bit does not belong to the rate matching pattern, or a value of a bit may be set to 1, indicating that an RB corresponding to the bit belongs to the rate matching pattern. Alternatively, a value of a bit may be set to 1, indicating that an RB corresponding to the bit does not belong to the rate matching pattern, or a value of a bit may be set to 0, indicating that an RB corresponding to the bit belongs to the rate matching pattern. This is not limited.

For example, if the bitmap corresponding to the first indication information is 10011011, it indicates that the first indication information indicates that first, fourth, fifth, seventh, and eighth RBs in eight RBs associated with the bitmap belong to the rate matching pattern corresponding to the first indication information, and second, third, and sixth RBs do not belong to the rate matching pattern corresponding to the first indication information.

It may be understood that the bitmap is a representation form of the first indication information, and the first indication information may alternatively be in any other representation form that can indicate one or more RBs associated with the rate matching pattern. This is not limited.

For the second indication information, in a first possible implementation, the second indication information of each rate matching pattern may indicate a subcarrier pattern jointly associated with all RBs associated with the rate matching pattern.

The subcarrier pattern includes one or more subcarriers in one RB, and a pattern formed by the one or more subcarriers is referred to as the subcarrier pattern. In this example, each of all RBs associated with a same rate matching pattern is associated with a same subcarrier pattern. The second indication information may indicate, by indicating one subcarrier pattern, one or more subcarriers associated with the rate matching pattern, so that signaling overheads can be reduced.

Optionally, the subcarrier pattern may be predefined.

For example, the second indication information may include A bits, and a specific value of A may be determined based on a predefined quantity B of subcarrier patterns. For example, $A = \left⌈{log}_{2} B\right⌉$, and ┌ ┐ indicates round-up. For another example, the second indication information may be a bitmap, and A=B.

For example, assuming that the subcarrier patterns include a first subcarrier pattern, a second subcarrier pattern, a third subcarrier pattern, and a fourth subcarrier pattern, the second indication information may include $\left⌈{log}_{2} 4\right⌉ = 2$ bits. As shown in second indication information (1) in Table 1, the second indication information may be set to 00, to indicate that the subcarrier pattern jointly associated with all the RBs associated with the rate matching pattern is the first subcarrier pattern; the second indication information is set to 01, to indicate that the subcarrier pattern jointly associated with all the RBs associated with the rate matching pattern is the second subcarrier pattern; the second indication information is set to 10, to indicate that the subcarrier pattern jointly associated with all the RBs associated with the rate matching pattern is the third subcarrier pattern; or the second indication information is set to 11, to indicate that the subcarrier pattern jointly associated with all the RBs associated with the rate matching pattern is the fourth subcarrier pattern.

**Table 1**

| Second indication information (1) | Second indication information (2) | Subcarrier pattern |
|---|---|---|
| 00 | 1000 | First subcarrier pattern |
| 01 | 0100 | Second subcarrier pattern |
| 10 | 0010 | Third subcarrier pattern |
| 11 | 0001 | Fourth subcarrier pattern |

For another example, assuming that the subcarrier patterns include the first subcarrier pattern, the second subcarrier pattern, the third subcarrier pattern, and the fourth subcarrier pattern, and that the second indication information is a bitmap, the second indication information may include four bits, as shown in second indication information (2) in Table 1. The second indication information may be set to 1000, to indicate that the subcarrier pattern jointly associated with all the RBs associated with the rate matching pattern is the first subcarrier pattern; the second indication information is set to 0100, to indicate that the subcarrier pattern jointly associated with all the RBs associated with the rate matching pattern is the second subcarrier pattern; the second indication information is set to 0010, to indicate that the subcarrier pattern jointly associated with all the RBs associated with the rate matching pattern is the third subcarrier pattern; or the second indication information is set to 0001, to indicate that the subcarrier pattern jointly associated with all the RBs associated with the rate matching pattern is the fourth subcarrier pattern.

For the second indication information, in a second possible implementation, the second indication information of each rate matching pattern may indicate subcarrier patterns respectively associated with all the RBs associated with the rate matching pattern.

The subcarrier pattern includes one or more subcarriers in one RB. In this example, a subcarrier pattern associated with each RB is separately indicated. Subcarrier patterns associated with any two of all RBs associated with a same rate matching pattern may be the same or may be different. The second indication information may indicate the subcarrier pattern associated with each RB, thereby improving flexibility in indicating a subcarrier associated with the rate matching pattern and improving communication performance.

Optionally, the subcarrier pattern may be predefined.

For example, the second indication information may include Y*A bits, or the second indication information may include X*A bits.

Y is a quantity of RBs corresponding to the first indication information, X is a quantity of RBs that belong to the rate matching pattern in the RBs corresponding to the first indication information, X is less than or equal to Y, each RB corresponds to A bits, and the A bits corresponding to each RB indicate a subcarrier pattern associated with the RB corresponding to the A bits. For descriptions of A, refer to the foregoing descriptions of A. Details are not described herein again. Compared with the Y*A bits, setting the second indication information to the X*A bits can reduce signaling overheads.

For example, assuming that the subcarrier patterns include the first subcarrier pattern, the second subcarrier pattern, the third subcarrier pattern, and the fourth subcarrier pattern, where Y is 4 and A is 2, the second indication information may include eight bits. Assuming that the second indication information is 10010011, the second indication information may indicate that a subcarrier pattern associated with a first RB is the third subcarrier pattern, a subcarrier pattern associated with a second RB is the second subcarrier pattern, a subcarrier pattern associated with a third RB is the first subcarrier pattern, and a subcarrier pattern associated with a fourth RB is the fourth subcarrier pattern.

For another example, assuming that the subcarrier patterns include the first subcarrier pattern, the second subcarrier pattern, the third subcarrier pattern, and the fourth subcarrier pattern, where Y is 4, X is 3, and A is 2, the second indication information may include six bits. Assuming that the second indication information is 100100, the second indication information may indicate that a subcarrier pattern associated with a first RB that belongs to the rate matching pattern in four RBs corresponding to the first indication information is the third subcarrier, a subcarrier pattern associated with a second RB that belongs to the rate matching pattern in the four RBs corresponding to the first indication information is the second subcarrier, and a subcarrier pattern associated with a third RB that belongs to the rate matching pattern in the four RBs corresponding to the first indication information is the first subcarrier.

In a second possible design, the configuration information of each rate matching pattern includes third indication information.

The third indication information indicates one or more RBs associated with the rate matching pattern and one or more subcarriers associated with the one or more RBs.

For example, the third indication information may include N*M bits, N is a quantity of RBs corresponding to the third indication information, each RB corresponds to M bits, and the M bits corresponding to each RB indicate whether the RB corresponding to the M bits belongs to the rate matching pattern and a subcarrier pattern associated with the RB.

Optionally, N may be predefined in a protocol.

For example, for the M bits corresponding to each RB, a first value of the M bits indicates that the RB corresponding to the M bits does not belong to the rate matching pattern; or a second value of the M bits indicates that the RB corresponding to the M bits belongs to the rate matching pattern, and that the RB is associated with a first subcarrier pattern; or a third value of the M bits indicates that the RB corresponding to the M bits belongs to the rate matching pattern, and that the RB is associated with a second subcarrier pattern; or a fourth value of the M bits indicates that the RB corresponding to the M bits belongs to the rate matching pattern, and that the RB is associated with a third subcarrier pattern; or a fifth value of the M bits indicates that the RB corresponding to the M bits belongs to the rate matching pattern, and that the RB is associated with a fourth subcarrier pattern.

For example, assuming that N is 4 and that M is 3, the third indication information may include 12 bits, and every three bits correspond to one of four RBs. A value and a meaning of every three bits may be shown in the following Table 2. Assuming that the third indication information is 000 011 100 001, it indicates that a first RB does not belong to the rate matching pattern; a second RB belongs to the rate matching pattern, and the RB is associated with the third subcarrier pattern; a third RB belongs to the rate matching pattern, and the RB is associated with the fourth subcarrier pattern; and a fourth RB belongs to the rate matching pattern, and the RB is associated with the first subcarrier pattern.

**Table 2**

| Value of every three bits | Meaning |
|---|---|
| 000 | An RB corresponding to the three bits does not belong to the rate matching pattern |
| 001 | An RB corresponding to the three bits belongs to the rate matching pattern, and the RB is associated with the first subcarrier pattern |
| 010 | An RB corresponding to the three bits belongs to the rate matching pattern, and the RB is associated with the second subcarrier pattern |
| 011 | An RB corresponding to the three bits belongs to the rate matching pattern, and the RB is associated with the third subcarrier pattern |
| 100 | An RB corresponding to the three bits belongs to the rate matching pattern, and the RB is associated with the fourth subcarrier pattern |
| 101 | Reserved |
| 110 | Reserved |
| 111 | Reserved |

Based on the descriptions of the subcarrier patterns in the foregoing two possible designs, for example, the subcarrier patterns may include the following several subcarrier patterns:
a first subcarrier pattern, where the first subcarrier pattern includes all subcarriers in one RB;
a second subcarrier pattern, where the second subcarrier pattern includes first, third, fifth, seventh, ninth, and eleventh subcarriers in one RB;
a third subcarrier pattern, where the third subcarrier pattern includes first, second, seventh, and eighth subcarriers in one RB; and
a fourth subcarrier pattern, where the fourth subcarrier pattern includes first, second, third, fourth, seventh, eighth, ninth, and tenth subcarriers in one RB.

An i^{th} subcarrier is an i^{th} subcarrier that is in an RB and that is arranged in ascending order or descending order of frequencies, where i=1, 2, 3, ..., 11, or 12.

The first subcarrier pattern may also be described as follows: The one or more subcarriers indicated by the first information include all subcarriers in one RB, or a pattern formed by all subcarriers in one RB is the first subcarrier pattern. The second subcarrier pattern may also be described as follows: The one or more subcarriers indicated by the first information include first, third, fifth, seventh, ninth, and eleventh subcarriers in one RB, or a pattern formed by first, third, fifth, seventh, ninth, and eleventh subcarriers in one RB is the second subcarrier pattern. The third subcarrier pattern may also be described as follows: The one or more subcarriers indicated by the first information include first, second, seventh, and eighth subcarriers in one RB, or a pattern formed by first, second, seventh, and eighth subcarriers in one RB is the third subcarrier pattern. The fourth subcarrier pattern may also be described as follows: The one or more subcarriers indicated by the first information include first, second, third, fourth, seventh, eighth, ninth, and tenth subcarriers in one RB, or a pattern formed by first, second, third, fourth, seventh, eighth, ninth, and tenth subcarriers in one RB is the fourth subcarrier pattern.

Optionally, a subcarrier pattern corresponding to the frequency domain resource may be determined in the following manner: A frequency domain resource of a rate matching pattern of the first RAT may be defined with reference to a frequency domain resource design of a DMRS of a second channel of a second RAT. Therefore, it is ensured that when spectrum sharing is performed between the first RAT and the second RAT, the first channel of the first RAT is not transmitted on a frequency domain resource of the DMRS of the second channel of the second RAT (or in other words, rate matching is performed for the first channel of the first RAT on the frequency domain resource of the DMRS of the second channel of the second RAT, or in other words, the first channel of the first RAT is muted on the frequency domain resource of the DMRS of the second channel of the second RAT). In this way, DMRS orthogonality is maintained, and communication performance is improved.

The second RAT may be any communication system other than the first RAT in the foregoing communication systems. For example, the first RAT is the 6G communication system, and the second RAT is the 5G communication system; or the first RAT is the 5G communication system, and the second RAT is the 6G communication system, or the like. This is not limited.

The second channel is a physical uplink shared channel or a physical downlink shared channel. It may be understood that, in this embodiment of this application, a link direction of the first channel is the same or different from a link direction of the second channel. This is not limited. In other words, the first channel may be a physical uplink shared channel, and the second channel may be a physical uplink shared channel. Alternatively, the first channel may be a physical uplink shared channel, and the second channel may be a physical downlink shared channel. Alternatively, the first channel may be a physical downlink shared channel, and the second channel may be a physical uplink shared channel. Alternatively, the first channel may be a physical downlink shared channel, and the second channel may be a physical downlink shared channel. This is not limited.

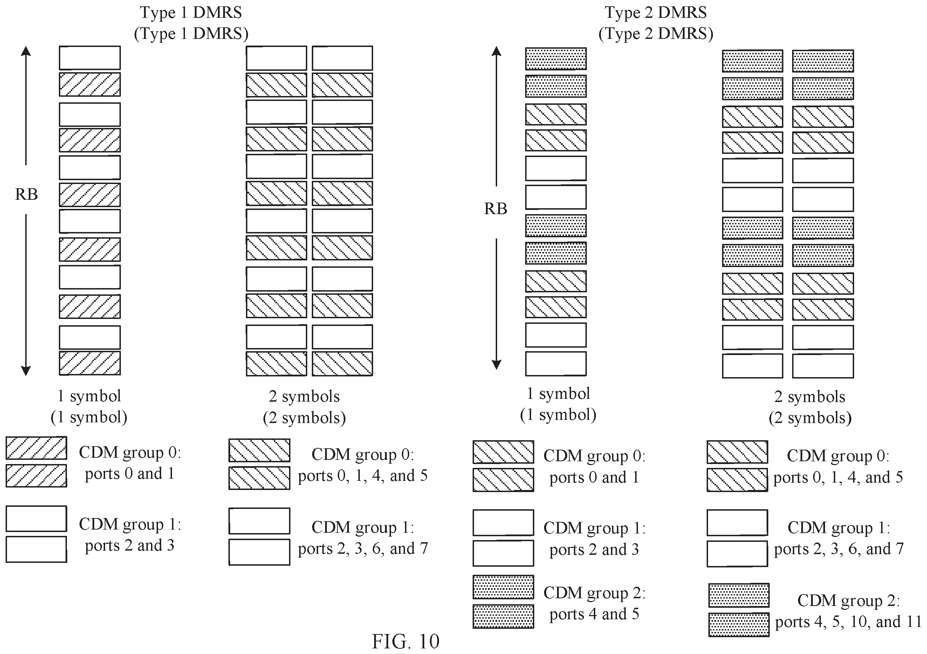

For example, the first RAT is the 6G communication system, and the second RAT is the 5G communication system. A DMRS of a second channel of the 5G communication system supports a plurality of ports (ports), and the plurality of ports are orthogonal to each other. Based on different supported DMRS port structures, as shown in FIG. 10, there are two types of DMRSs: a type 1 DMRS (type 1 DMRS) and a type 2 DMRS (type 2 DMRS). Each type of DMRS may be further classified into a 1-symbol DMRS (1-symbol DMRS) and a 2-symbol DMRS (2-symbol DMRS). Therefore, there are four DMRS structures in total.

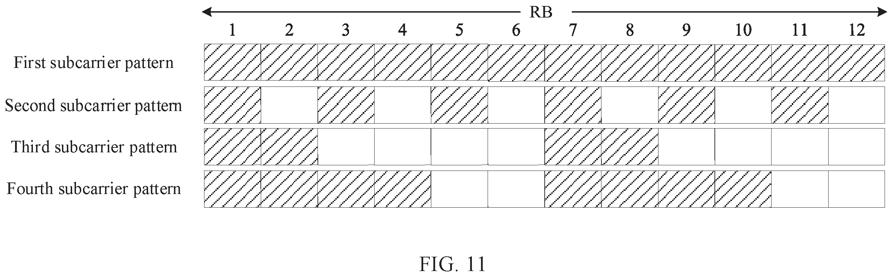

The 5G communication system may use one or more DMRS ports at the same time. Depending on used DMRS ports, in one RB, there are four possibilities of subcarriers occupied by the DMRS, as shown in FIG. 11. In other words, subcarriers occupied by the DMRS may be subcarriers included in the first subcarrier pattern, or the second subcarrier pattern, or the third subcarrier pattern, or the fourth subcarrier pattern.

As shown in FIG. 10 and FIG. 11, the first subcarrier pattern may correspond to the type 1 or type 2 DMRS and use all code division multiplexing (code division multiplexing, CDM) groups. The second subcarrier pattern may correspond to the type 1 DMRS and use a CDM group 0. The third subcarrier pattern may correspond to the type 2 DMRS and use the CDM group 0. The fourth subcarrier pattern may correspond to the type 2 DMRS and use the CDM group 0 and a CDM group 1.

The following uses a time domain resource as an example to describe in detail configuration information of each rate matching pattern.

The configuration information of each rate matching pattern may include tenth indication information, and the tenth indication information indicates a symbol associated with the rate matching pattern in one or more slots/subframes.

Optionally, the tenth indication information may be a bitmap, and each bit in the bitmap indicates whether a symbol associated with the bit belongs to the rate matching pattern. A value of a bit may be set to 0, indicating that a symbol corresponding to the bit does not belong to the rate matching pattern, or a value of a bit may be set to 1, indicating that a symbol corresponding to the bit belongs to the rate matching pattern. Alternatively, a value of a bit may be set to 1, indicating that a symbol corresponding to the bit does not belong to the rate matching pattern, or a value of a bit may be set to 0, indicating that a symbol corresponding to the bit belongs to the rate matching pattern. This is not limited.

For example, assuming that the tenth indication information indicates a symbol associated with the rate matching pattern in Z slots/subframes (Z is a positive integer), the tenth indication information may include Z*K bits that are in a one-to-one correspondence with Z*K symbols included in the Z slots/subframes, where K is a quantity of symbols included in each slot/subframe.

Optionally, the configuration information of each rate matching pattern may further include fourth indication information, and the fourth indication information indicates a time domain periodicity of the rate matching pattern and a time domain resource pattern in the periodicity.

The fourth indication information may be in a bitmap format. For a pair of resources in frequency domain (for example, a frequency domain resource indicated by the first indication information and the second indication information, or a frequency domain resource indicated by the third indication information) and time domain (for example, a time domain resource indicated by the tenth indication information), the fourth indication information is used to configure a periodic time domain pattern, where each bit corresponds to one time unit, and the time unit is equal to duration of the time domain resource (that is, one or more slots/subframes indicated by the tenth indication information). When a value of a bit is '1', it indicates presence of a time unit corresponding to the bit; otherwise, the time unit is absent. For details, refer to the foregoing description of the parameter "periodicityAndPattern". Details are not described again.

Optionally, a candidate value of the time domain periodicity may include one or more of the following: 1, 2, 4, 5, 8, 10, 20, 40, 80, 160, or 320 time units. Each time unit may include one or more slots or subframes corresponding to the rate matching pattern, that is, each time unit may include one or more slots/subframes corresponding to the tenth indication information. For example, each time unit may include Z slots/subframes corresponding to the tenth indication information.

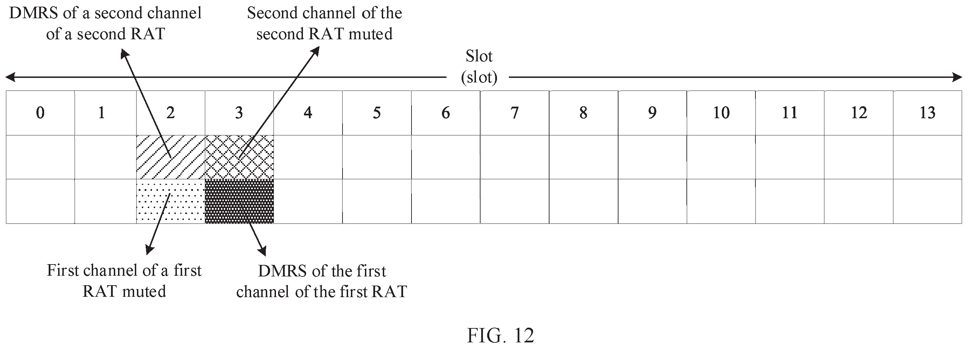

Optionally, the time domain resource may be determined in the following manner: A time domain resource of the rate matching pattern of the first RAT may be defined with reference to a time domain resource design of the DMRS of the second channel of the second RAT. Therefore, it is ensured that when spectrum sharing is performed between the first RAT and the second RAT, as shown in FIG. 12, the first channel of the first RAT is not transmitted on a time domain resource of the DMRS of the second channel of the second RAT (or in other words, rate matching is performed for the first channel of the first RAT on the time domain resource of the DMRS of the second channel of the second RAT, or in other words, the first channel of the first RAT is muted on the time domain resource of the DMRS of the second channel of the second RAT); and the second channel of the second RAT is not transmitted on a time domain resource of a DMRS of the first channel of the first RAT (or in other words, rate matching is performed for the second channel of the second RAT on the time domain resource of the DMRS of the first channel of the first RAT, or in other words, the second channel of the second RAT is muted on the time domain resource of the DMRS of the first channel of the first RAT). In this way, DMRS orthogonality is maintained, and communication performance is improved.

For example, assuming that the first RAT is the 6G communication system, and that the second RAT is the 5G communication system, the DMRS of the second channel of the 5G communication system may be present on any symbol in one slot/subframe. Therefore, the tenth indication information and the fourth indication information may indicate the time domain resource of the rate matching pattern.

Optionally, the configuration information of each rate matching pattern may further include eleventh indication information, and the eleventh indication information indicates a subcarrier spacing associated with the rate matching pattern.

Optionally, each rate matching pattern may be a rate matching pattern dedicated to a bandwidth part (bandwidth part, BWP); or each rate matching pattern is a common rate matching pattern of a cell.

If a rate matching pattern is configured for a BWP, the rate matching pattern takes effect for the associated BWP, or in other words, the rate matching pattern takes effect for a first channel on the associated BWP. If a rate matching pattern is configured for a serving cell, the rate matching pattern may take effect for all BWPs of the serving cell, or in other words, the rate matching pattern takes effect for first channels on all BWPs of the serving cell.

Based on the foregoing description of the first information, optionally, the network device may send the first information to the terminal device by carrying the first information in one or more of the following types of signaling: radio resource control (radio resource control, RRC) signaling, system information block (system information block, SIB) signaling, and the like. This is not limited.

Optionally, the network device may further send fifth indication information to the terminal device, where the fifth indication information indicates an effective rate matching pattern in the one or more rate matching patterns.

Optionally, when sending the configuration information of the rate matching pattern to the terminal device, the network device may configure one or more rate matching patterns for the terminal device at a granularity of a rate matching pattern, or may configure one or more rate matching pattern groups for the terminal device at a granularity of a rate matching pattern group, where each rate matching pattern group may include one or more rate matching patterns.

Optionally, the network device may further send twelfth indication information to the terminal device, where the twelfth indication information indicates an effective rate matching pattern group in the one or more rate matching pattern groups.

Optionally, when the network device sends the fifth indication information or the twelfth indication information to the terminal device, the fifth indication information or the twelfth indication information may be carried in one or more of the following types of signaling: a SIB, RRC signaling, DCI, a media access control control element (media access control control element, MAC CE), and other signaling, and sent to the terminal device. This is not limited.

Based on the method shown in FIG. 9, when spectrum sharing is performed between the first RAT and the second RAT, the first channel of the first RAT and the second channel of the second RAT may be transmitted in a time division multiplexing manner, that is, the first channel of the first RAT is muted on a time-frequency resource of the DMRS of the second channel of the second RAT, or in other words, no data of the first channel of the first RAT is sent on the time-frequency resource of the DMRS of the second channel of the second RAT. In this way, DMRS orthogonality is maintained, and communication performance is improved.

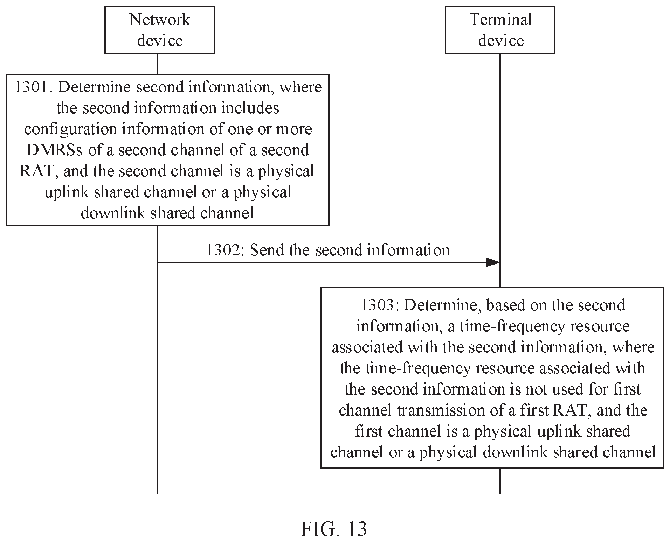

Different from FIG. 9 in which the network device uses the first information to indicate the time-frequency resource that is not for first channel transmission of the first RAT, FIG. 13 shows a method in which the network device may alternatively use second information to indicate the time-frequency resource that is not for first channel transmission of the first RAT.

FIG. 13 is a diagram illustrating a communication method according to an embodiment of this application. As shown in FIG. 13, the method may be applied to a first RAT, and the method may include the following steps.

Step 1301: A network device determines second information.

Step 1302: The network device sends the second information to a terminal device, and correspondingly, the terminal device receives the second information from the network device.

Step 1303: The terminal device determines, based on the second information, a time-frequency resource associated with the second information, where the time-frequency resource associated with the second information is not for first channel transmission of the first RAT.

The second information may include configuration information of one or more DMRSs of a second channel of a second RAT. The first channel is a physical uplink shared channel or a physical downlink shared channel, and the second channel is a physical uplink shared channel or a physical downlink shared channel. For descriptions of the first channel and the second channel, refer to related descriptions of FIG. 9. Details are not described again.

For example, configuration information of each DMRS may include at least one of the following: a DMRS type, a quantity of DMRS symbols, a DMRS time domain position, DMRS time domain duration, a DMRS frequency domain resource, a DMRS code division multiplexing CDM group without data, configuration information of a phase tracking signal (phase tracking reference signal, PTRS), and the like. This is not limited.

The DMRS frequency domain resource may indicate an RB associated with the DMRS.

Optionally, the network device may send the second information to the terminal device by carrying the second information in one or more of the following types of signaling: RRC signaling, SIB signaling, and the like. This is not limited.

Optionally, the network device may further send sixth indication information to the terminal device, where the sixth indication information indicates configuration information of a DMRS that takes effect in the configuration information of the one or more DMRSs.

Optionally, the network device may send the sixth indication information to the terminal device by carrying the sixth indication information in one or more of the following types of signaling: a SIB, RRC signaling, DCI, a MAC CE, and other signaling. This is not limited.

Based on the foregoing description of the DMRS, optionally, the DMRS may be extended. For example, two types of DMRSs may be defined in the first RAT, and a first type of DMRS is used to transmit and demodulate the first channel. A function of a second type of DMRS is different from that of the first type of DMRS. A time-frequency resource of the second type of DMRS is neither used to transmit the first channel nor used to demodulate the first channel, and is only used to define the time-frequency resource that is not for first channel transmission of the first RAT.

Optionally, in the configuration information of the one or more DMRSs, configuration information of at least one DMRS includes seventh indication information, where the seventh indication information indicates that a time-frequency resource associated with the DMRS is not for first channel transmission of the first RAT. The DMRS corresponding to the seventh indication information is the second type of DMRS.

For example, assuming that rate matching is performed for a first channel of a 6G communication system on a time-frequency resource of a DMRS of a second channel of a 5G communication system, two types of DMRSs may be defined in the 6G communication system. A first type of DMRS has a function similar to that of the DMRS of the second channel of the 5G communication system, and may be used to transmit and demodulate the first channel. A second type of DMRS has a function different from that of the DMRS of the second channel of the 5G communication system. The terminal device may assume that a time-frequency resource of the second type of DMRS is neither used to transmit a PXSCH nor used to demodulate a PXSCH. For the second type of DMRS, if the first channel is a PDSCH, the terminal device may not make any assumption about a signal transmitted on the time-frequency resource of this type of DMRS; or if the first channel is a PUSCH, the terminal device may not send this type of DMRS. Optionally, a structure of the second type of DMRS is the same as or similar to a structure of the DMRS of the second channel of the 5G communication system.

In an extensible manner, the first type of DMRS may be referred to as a non-zero power (non-zero-power, NZP) DMRS, and the second type of DMRS may be referred to as a zero-power (zero-power, ZP) DMRS.

Optionally, for the second type of DMRS, the network device may configure one or more pieces of configuration information of the second type of DMRS for the terminal device. Further, the network device may further indicate, by using the sixth indication information, configuration information of the second type of DMRS that takes effect in the one or more pieces of configuration information of the second type of DMRS.

Based on the method shown in FIG. 13, the network device may directly configure, for the terminal device by using the second information, the configuration information of the DMRS on which rate matching needs to be performed, and the terminal device determines the time-frequency resource of the DMRS based on the configuration information of the DMRS, to determine the time-frequency resource that is not for first channel transmission of the first RAT. In other words, when spectrum sharing is performed between the first RAT and the second RAT, the first channel of the first RAT and the second channel of the second RAT may be transmitted in a time division multiplexing manner, and the first channel of the first RAT is muted on the time-frequency resource of the DMRS of the second channel of the second RAT, or in other words, no data of the first channel of the first RAT is sent on the time-frequency resource of the DMRS of the second channel of the second RAT. In this way, interference caused by data transmission of the first channel of the first RAT to DMRS transmission of the second channel of the second RAT is avoided, orthogonality is maintained between a DMRS of the first channel of the first RAT and the DMRS of the second channel of the second RAT, and communication performance is improved.

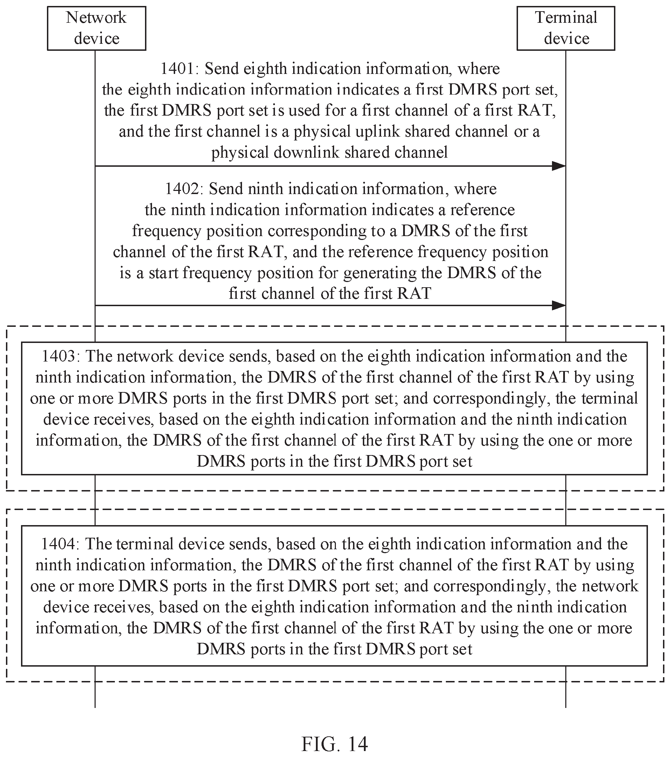

Unlike FIG. 9 to FIG. 13 in which the first channel of the first RAT and the second channel of the second RAT are transmitted in the time division multiplexing manner to improve communication system performance, with reference to FIG. 14, the network device may alternatively indicate a reference frequency position to the terminal device, to ensure that the first RAT and the second RAT use a same base sequence on a same time-frequency resource, thereby improving communication system performance.

FIG. 14 is a diagram illustrating a communication method according to an embodiment of this application. As shown in FIG. 14, the method may be applied to a first RAT, and the method may include the following steps.

Step 1401: A network device sends eighth indication information to a terminal device, and correspondingly, the terminal device receives the eighth indication information from the network device.

The eighth indication information indicates a first DMRS port set, the first DMRS port set is used for a first channel of the first RAT, and the first DMRS port set includes one or more DMRS ports. The first channel is a physical uplink shared channel or a physical downlink shared channel.

For descriptions of the first DMRS port set, refer to detailed descriptions of the first DMRS port set in the following two possible designs. Details are not described herein again.

Step 1402: The network device sends ninth indication information to the terminal device, and correspondingly, the terminal device receives the ninth indication information from the network device.

The ninth indication information indicates a reference frequency position corresponding to a DMRS of the first channel of the first RAT, and the reference frequency position is a start frequency position for generating the DMRS of the first channel of the first RAT.

Step 1403: The network device sends, based on the eighth indication information and the ninth indication information, the DMRS of the first channel of the first RAT by using the one or more DMRS ports in the first DMRS port set; and correspondingly, the terminal device receives, based on the eighth indication information and the ninth indication information, the DMRS of the first channel of the first RAT by using the one or more DMRS ports in the first DMRS port set.

The first channel is a physical downlink shared channel.

Specifically, the network device may determine the first DMRS port set based on the eighth indication information, determine, based on the ninth indication information, the reference frequency position corresponding to the DMRS of the first channel of the first RAT, generate the DMRS of the first channel of the first RAT based on the reference frequency position, and then send the DMRS of the first channel of the first RAT by using the one or more DMRS ports in the first DMRS port set. Correspondingly, the terminal device may determine the first DMRS port set based on the eighth indication information, determine, based on the ninth indication information, the reference frequency position corresponding to the DMRS of the first channel of the first RAT, and receive the DMRS of the first channel of the first RAT based on the reference frequency position by using the one or more DMRS ports in the first DMRS port set.

Alternatively, the foregoing step 1403 may be replaced with the following step 1404.

Step 1404: The terminal device sends, based on the eighth indication information and the ninth indication information, the DMRS of the first channel of the first RAT by using the one or more DMRS ports in the first DMRS port set; and correspondingly, the network device receives, based on the eighth indication information and the ninth indication information, the DMRS of the first channel of the first RAT by using the one or more DMRS ports in the first DMRS port set.

The first channel is a physical uplink shared channel.

Specifically, the terminal device may determine the first DMRS port set based on the eighth indication information, determine, based on the ninth indication information, the reference frequency position corresponding to the DMRS of the first channel of the first RAT, generate the DMRS of the first channel of the first RAT based on the reference frequency position, and then send the DMRS of the first channel of the first RAT by using the one or more DMRS ports in the first DMRS port set. Correspondingly, the network device may determine the first DMRS port set based on the eighth indication information, determine, based on the ninth indication information, the reference frequency position corresponding to the DMRS of the first channel of the first RAT, and receive the DMRS of the first channel of the first RAT based on the reference frequency position by using the one or more DMRS ports in the first DMRS port set.

Based on the method shown in FIG. 14, the first DMRS port set is described in detail with reference to the following two possible designs.

In a first possible design, a DMRS port included in the first DMRS port set is the same as a DMRS port included in a second DMRS port set. In other words, a same design may be used for the first DMRS port set of the first RAT and a second DMRS port set of a second RAT.

The second DMRS port set is used for a second channel of the second RAT, and the second channel is a physical uplink shared channel or a physical downlink shared channel.

Optionally, a time domain resource associated with a DMRS port in the first DMRS port set is the same as a time domain resource associated with a DMRS port in the second DMRS port set.

Optionally, the second channel of the second RAT uses one or more DMRS ports in the second DMRS port set, and the one or more DMRS ports in the first DMRS port set are orthogonal to the one or more DMRS ports in the second DMRS port set.

For example, frequency division multiplexing and/or code division multiplexing are/is performed between the one or more DMRS ports in the first DMRS port set and the one or more DMRS ports in the second DMRS port set. In other words, the first RAT and the second RAT share a group of orthogonal DMRS ports, and the first channel of the first RAT and the second channel of the second RAT use different DMRS ports.

Optionally, a length of a time domain orthogonal cover code (orthogonal cover code, OCC) associated with a DMRS port in the first DMRS port set is equal to a length of a time domain OCC associated with a DMRS port in the second DMRS port set.

Optionally, a length of a frequency domain OCC associated with a DMRS port in the first DMRS port set is equal to a length of a frequency domain OCC associated with a DMRS port in the second DMRS port set.

The frequency domain OCC is an OCC used in frequency domain, the time domain OCC is an OCC used in time domain, and the length of the OCC is a quantity of elements included in an OCC sequence.

For example, assuming that the first RAT is a 6G communication system, and that the second RAT is a 5G communication system, a same design may be used for the first DMRS port set in the 6G communication system and the second DMRS port set in the 5G communication system.

A DMRS of a second channel of the 5G communication system may support a plurality of ports, to support a plurality of spatial multiplexing layers or data streams. Different ports may be orthogonal to each other in a frequency division multiplexing or code division multiplexing manner. Based on different parameters such as a DMRS type, a quantity of DMRS symbols, and an OCC, a quantity of ports supported by the DMRS of the second channel of the 5G communication system may be 4, 6, 8, 12, 24, or the like. DMRS ports are in a one-to-one correspondence with spatial multiplexing layers or data streams. These layers or data streams may come from a same user or different users, which is referred to as single-user multiple-input multiple-output (single-user multiple input multiple output, SU-MIMO) or multi-user multiple-input multiple-output (multi-user multiple input multiple output, MU-MIMO).

Based on this, a DMRS of a first channel of the 6G communication system and the DMRS of the second channel of the 5G communication system may use a same DMRS type, a same quantity of DMRS type symbols, a same base sequence, a same OCC, and the like. This is equivalent to enabling the DMRS of the first channel of the 6G communication system and the DMRS of the second channel of the 5G communication system to share one group of DMRS ports, that is, the first DMRS port set and the second DMRS port set are a same group of DMRS ports. Further, when scheduling the first channel and the second channel respectively, a cell of the 6G communication system and a cell of the 5G communication system respectively use different DMRS ports in a group of DMRS ports, thereby ensuring orthogonality between the DMRS of the first channel of the 6G communication system and the DMRS of the second channel of the 5G communication system and improving communication performance.

In a second possible design, the DMRS ports included in the second DMRS port set are a part of the DMRS ports included in the first DMRS port set, or in other words, time domain extension (for example, an OCC with a longer length is used in time domain) and/or frequency domain extension (for example, an OCC with a longer length is used in frequency domain) may be performed based on the second DMRS port set, to determine the first DMRS port set. In other words, a quantity of DMRS ports included in the first DMRS port set is greater than a quantity of DMRS ports included in the second DMRS port set.

The second DMRS port set is used for the second channel of the second RAT, and the second channel is a physical uplink shared channel or a physical downlink shared channel.

Optionally, the second channel of the second RAT uses the one or more DMRS ports in the second DMRS port set, and the one or more DMRS ports in the first DMRS port set are orthogonal to the one or more DMRS ports in the second DMRS port set.

For example, frequency division multiplexing and/or code division multiplexing are/is performed between the one or more DMRS ports in the first DMRS port set and the one or more DMRS ports in the second DMRS port set.

The following describes the first DMRS port set by using frequency domain extension as an example.

Any DMRS port in the first DMRS port set may be associated with 2*Q RBs, where Q is a positive integer.

Optionally, the first DMRS port set may include three CDM groups, and each CDM group includes one or more DMRS ports in the first DMRS port set, where any DMRS port in a first CDM group is associated with first, second, seventh, and eighth subcarriers of each of the 2*Q RBs, any DMRS port in a second CDM group is associated with third, fourth, ninth, and tenth subcarriers of each of the 2*Q RBs, and any DMRS port in a third CDM group is associated with fifth, sixth, eleventh, and twelfth subcarriers of each of the 2*Q RBs.

Optionally, any DMRS port in the first DMRS port set may be associated with a frequency domain OCC whose length is 8*Q.

A length of a frequency domain OCC associated with a DMRS port in the first DMRS port set is greater than a length of a frequency domain OCC associated with a DMRS port in the second DMRS port set.

For example, a length of a frequency domain OCC associated with a DMRS port in the first DMRS port set is a positive integer multiple of twice a length of a frequency domain OCC associated with a DMRS port in the second DMRS port set.

For example, assuming that the length of the frequency domain OCC is 8, a frequency domain OCC used by the DMRS of the first channel of the first RAT may be one or more of eight sequences shown in the following Table 3.

**Table 3**

| n | Frequency domain OCC |
|---|---|
| 0 | [+1 +1 +1 +1 +1 +1 +1 +1] |
| 1 | [+1 -1 +1 -1 +1 -1 +1 -1] |
| 2 | [+1 +1 -1 -1 +1 +1 -1 -1] |
| 3 | [+1 -1 -1 +1 +1 -1 -1 +1] |
| 4 | [+1 +1 +1 +1 -1 -1 -1 -1] |
| 5 | [+1 -1 +1 -1 -1 +1 -1 +1] |
| 6 | [+1 +1 -1 -1 -1 -1 +1 +1] |
| 7 | [+1 -1 -1 +1 -1 +1 +1 -1] |

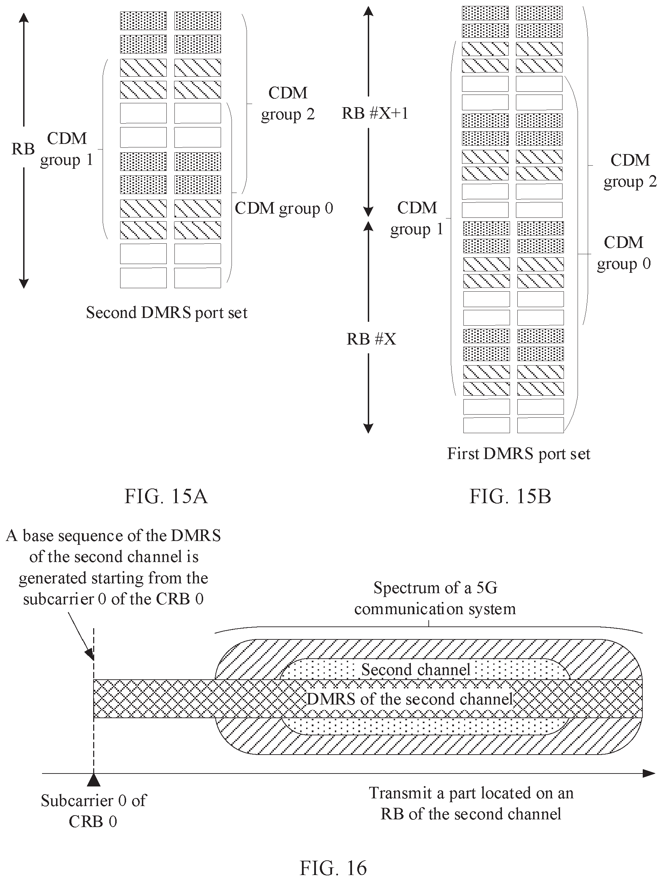

For example, as shown in FIG. 15A and FIG. 15B, assuming that both the DMRS of the first channel of the first RAT and the DMRS of the second channel of the second RAT use a type 2 DMRS and occupy two symbols, frequency domain extension may be performed on a basis of the second DMRS port set shown in FIG. 15A, to obtain the first DMRS port set shown in FIG. 15B.

A length of an OCC used by the DMRS of the second channel of the second RAT in frequency domain is 4, and a corresponding quantity of DMRS ports is 24. Any DMRS port in the second DMRS port set may be associated with one RB. The second DMRS port set may include three CDM groups, and each CDM group includes one or more DMRS ports in the second DMRS port set, where any DMRS port in a first CDM group is associated with first, second, seventh, and eighth subcarriers of one RB, any DMRS port in a second CDM group is associated with third, fourth, ninth, and tenth subcarriers of one RB, and any DMRS port in a third CDM group is associated with fifth, sixth, eleventh, and twelfth subcarriers of one RB.

A length of an OCC used by the DMRS of the first channel of the first RAT in frequency domain is 8, and a corresponding quantity of DMRS ports is 48. Any DMRS port in the first DMRS port set may be associated with two RBs. The first DMRS port set may include three CDM groups, and each CDM group includes one or more DMRS ports in the first DMRS port set, where any DMRS port in a first CDM group is associated with first, second, seventh, and eighth subcarriers of each of the two RBs, any DMRS port in a second CDM group is associated with third, fourth, ninth, and tenth subcarriers of each of the two RBs, and any DMRS port in a third CDM group is associated with fifth, sixth, eleventh, and twelfth subcarriers of each of the two RBs.

The following describes the first DMRS port set by using time domain extension as an example.

The first DMRS port set may be associated with 4*P time domain symbols, where P is a positive integer.

A time domain resource associated with a DMRS port in the second DMRS port set may be a part of a time domain resource associated with a DMRS port in the first DMRS port set.

For example, a length of a time domain OCC associated with a DMRS port in the first DMRS port set is greater than a length of a time domain OCC associated with a DMRS port in the second DMRS port set.

For example, a length of a time domain OCC associated with a DMRS port in the first DMRS port set is a positive integer multiple of twice a length of a time domain OCC associated with a DMRS port in the second DMRS port set.

In a first possible implementation, any DMRS port in the first DMRS port set may be associated with two of the 4*P time domain symbols.

In a possible specific implementation, the first DMRS port set may include 2*P DMRS port subsets, each DMRS port subset may include one or more DMRS ports in the first DMRS port set, and each DMRS port subset is associated with two of the 4*P time domain symbols.

Based on the foregoing possible implementation, any DMRS port in the first DMRS port set may be associated with a time domain OCC whose length is 2.

In a second possible implementation, any DMRS port in the first DMRS port set may be associated with all of the 4*P time domain symbols.

Based on the second possible implementation, optionally, any DMRS port in the first DMRS port set may be associated with a time domain OCC whose length is 4*P.

Based on the foregoing descriptions of the first DMRS port set and the second DMRS port set, it may be understood that, from a perspective of a terminal device, a terminal device of the first RAT may sense the first DMRS port set, but does not sense the second DMRS port set, and the second DMRS port set is not configured for the terminal device of the first RAT. A terminal device of the second RAT may sense the second DMRS port set, but does not sense the first DMRS port set. The first DMRS port set is not configured for the terminal device of the second RAT. The first DMRS port set and the second DMRS port set exist objectively, and meet the foregoing relationship.

Based on the method shown in FIG. 14, the following describes the ninth indication information that indicates the reference frequency position corresponding to the DMRS of the first channel of the first RAT.

The reference frequency position is the start frequency position for generating the DMRS of the first channel of the first RAT.

The reference frequency position corresponding to the DMRS of the first channel of the first RAT may be determined based on a reference frequency position corresponding to the DMRS of the second channel of the second RAT.

Specifically, the reference frequency position corresponding to the DMRS of the first channel of the first RAT is the same as the reference frequency position corresponding to the DMRS of the second channel of the second RAT.

Optionally, a base sequence corresponding to a DMRS port in the first DMRS port set is the same as a base sequence corresponding to a DMRS port in the second DMRS port set.

For example, assuming that the first RAT is the 6G communication system, and that the second RAT is the 5G communication system, for an OFDM-based second channel, a base sequence used for a DMRS of the second channel is generated across all common resource blocks (common resource blocks, CRBs) in frequency domain, but only a part located on an RB used for second channel transmission is transmitted. In other words, regardless of an RB on which transmission of the second channel starts, a frequency position referenced during generation of a sequence used for the DMRS of the second channel is a first subcarrier of a first CRB, that is, a subcarrier 0 of a CRB 0 shown in FIG. 16. In this way, it can be ensured that in an MU-MIMO scenario, a plurality of terminal devices use a same base sequence on a same time-frequency resource, and it is further ensured, by using an orthogonal cover code (orthogonal cover code, OCC), that a plurality of DMRS signals obtained based on the same base sequence, of the plurality of jointly scheduled terminal devices are orthogonal to each other. If base sequences used for DMRS signals of these terminal devices are different, the DMRS signals of these terminal devices are not orthogonal to each other. The base sequence may be generated by using a configurable identifier. Alternatively, if the identifier is not configured, a default value of the identifier is a physical cell identifier (physical-layer cell identifier, PCI).

Based on the foregoing description, to ensure orthogonality between the DMRS of the first channel of the 6G communication system and the DMRS of the second channel of the 5G communication system, it needs to be ensured that a same base sequence is used for the DMRS of the first channel and the DMRS of the second channel of the terminal device of the 6G communication system and the terminal device of the 5G communication system that are jointly scheduled on a same time-frequency resource. However, because ranges of a 5G spectrum and a 6G spectrum are different, frequency positions of a subcarrier 0 of a CRB 0 of a 5G cell and a subcarrier 0 of a CRB 0 of a 6G cell may be different. In this case, it may not be ensured that a base sequence used for the DMRS of the second channel of the 5G communication system is the same as a base sequence used for the DMRS of the first channel of the 6G communication system.

Based on this, the reference frequency position corresponding to the DMRS of the first channel of the first RAT may not be fixedly a subcarrier 0 of a CRB 0. Instead, the network device may indicate, by using the ninth indication information, the reference frequency position corresponding to the DMRS of the first channel of the first RAT, to ensure that the reference frequency position corresponding to the DMRS of the first channel of the first RAT is the same as the reference frequency position corresponding to the DMRS of the second channel of the second RAT, and ensure that on a same time-frequency resource, the base sequence used for the DMRS of the first channel of the first RAT and the base sequence used for the DMRS of the second channel of the second RAT are the same. In this way, orthogonality can be maintained between the DMRS of the first channel of the first RAT and the DMRS of the second channel of the second RAT, and communication system performance is improved.

For example, the ninth indication information may include an absolute radio frequency channel number (absolute radio frequency channel number, ARFCN) corresponding to the reference frequency position; or the ninth indication information may include a CRB index corresponding to the reference frequency position.

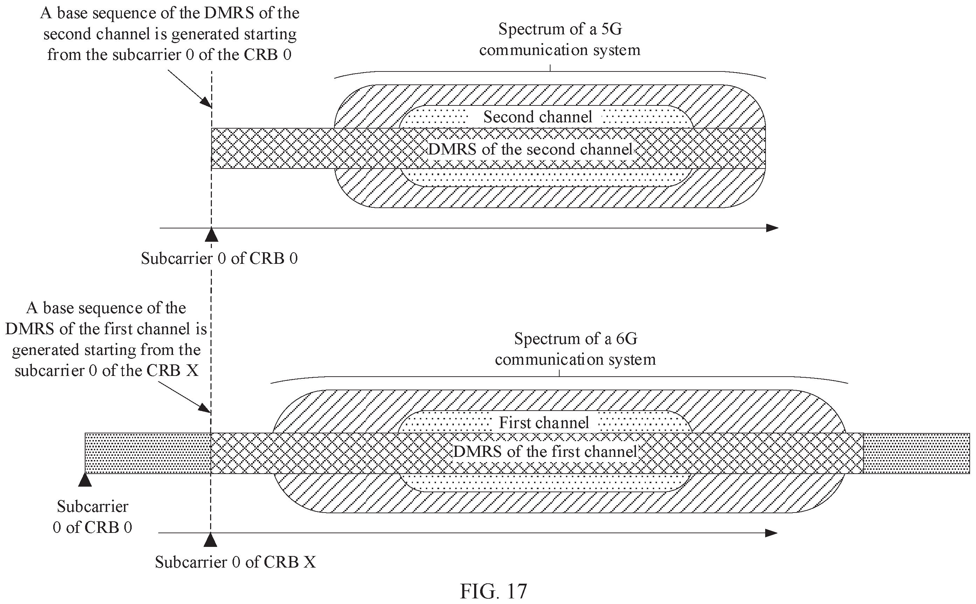

For example, as shown in FIG. 17, the reference frequency position may be a subcarrier 0 of a CRB X in the first RAT.

Optionally, as shown in FIG. 17, for a CRB 0 to a CRB X-1 in the first RAT, a base sequence of the DMRS of the first channel mapped to these RBs may be a last segment of a DMRS sequence.

Optionally, unlike the foregoing case in which the network device of the first RAT uses the ninth indication information to indicate the reference frequency position corresponding to the DMRS of the first channel of the first RAT, the network device of the first RAT may alternatively send thirteenth indication information to the terminal device of the first RAT, where the thirteenth indication information indicates a base sequence generation identifier corresponding to the DMRS of the first channel of the first RAT, and a base sequence generated by the terminal device of the first RAT based on the base sequence generation identifier is the same as a base sequence generated by the terminal device of the second RAT.

The network device of the first RAT may set an appropriate value of a base sequence generation identifier *N_{ID}* for the terminal device of the first RAT, to ensure that the base sequence of the DMRS of the first channel of the first RAT is the same as the base sequence of the DMRS of the second channel of the second RAT, where the two base sequences are generated on the same time-frequency resource.

For example, assuming that the DMRS of the first channel of the first RAT uses a base sequence generation formula of the DMRS of the second channel of the second RAT, for the PDSCH of the first RAT, the DMRS sequence *r*(*n*) of the PDSCH may be determined based on the following formula. The network device may determine a specific value of the base sequence generation identifier based on the following formula, and indicate the value to the terminal device by using the thirteenth indication information: $r \left(n\right) = \frac{1}{\sqrt{2}} \left(1-2⋅c\left(2n\right)\right) + j \frac{1}{\sqrt{2}} \left(1-2⋅c\left(2n+1\right)\right) ,$ where a pseudo-random sequence c(i) may be initialized based on the following formula: ${c}_{init} = \left({2}^{17}\left({N}_{symb}^{slot}{n}_{s , f}^{μ}+l+1\right)\left(2{N}_{ID}^{{\overline{n}}_{SCID}^{\overline{λ}}}+1\right)+{2}^{17}\left⌊\frac{\overline{λ}}{2}\right⌋+2{N}_{ID}^{{\overline{n}}_{SCID}^{\overline{λ}}}+{\overline{n}}_{SCID}^{\overline{λ}}\right) mod {2}^{31} .$${N}_{symb}^{slot}$ represents a quantity of symbols included in one slot; ${n}_{s , f}^{μ}$ represents a number of one slot in a frame; *l* represents a number of one symbol in a slot; ${N}_{ID}^{{\overline{n}}_{SCID}^{\overline{λ}}}$ is the foregoing base sequence generation identifier; *λ* represents a CDM group number; and a value of ${\overline{n}}_{SCID}^{\overline{λ}}$ is 0 or 1.

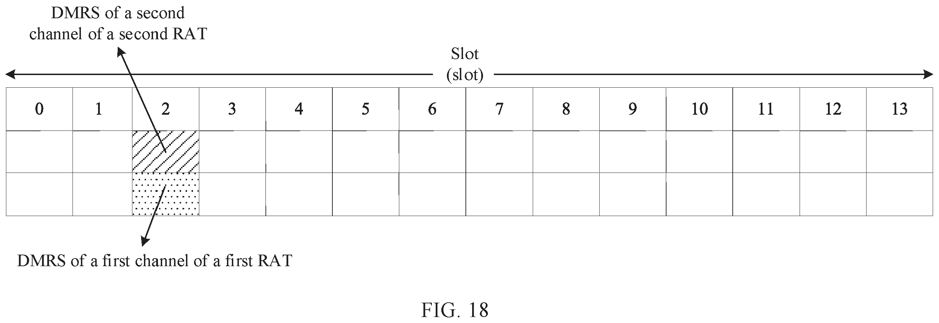

Based on the method shown in FIG. 14, as shown in FIG. 18, a time domain resource of the DMRS of the first channel of the first RAT may completely overlap a time domain resource of the DMRS of the second channel of the second RAT, and orthogonality is maintained in the frequency division multiplexing and/or code division multiplexing manner. This ensures that the DMRS of the first channel of the first RAT and the DMRS of the second channel of the second RAT can coexist in a spatial multiplexing manner, ensures orthogonality between the DMRSs, and improves communication performance.

Based on the methods shown in FIG. 9 to FIG. 14, when spectrum sharing is performed between the first RAT and the second RAT, orthogonality may be maintained between the DMRS of the first channel of the first RAT and the DMRS of the second channel of the second RAT based on the time division multiplexing manner shown in FIG. 9 or FIG. 13, to avoid a signal collision, or orthogonality may be maintained based on the frequency division multiplexing or code division multiplexing manner shown in FIG. 14, to avoid a signal collision. It may be understood that the foregoing time division multiplexing manner and the frequency division multiplexing or code division multiplexing manner may alternatively be used in combination, to maintain orthogonality between the DMRS of the first channel of the first RAT and the DMRS of the second channel of the second RAT, thereby avoiding a signal collision.

In other words, the time domain resource of the DMRS of the first channel of the first RAT may partially overlap the time domain resource of the DMRS of the second channel of the second RAT. On non-overlapping time domain resources, orthogonality may be maintained between the DMRS of the first channel of the first RAT and the DMRS of the second channel of the second RAT in the time division multiplexing manner shown in FIG. 9 or FIG. 13. On overlapping time domain resources, orthogonality may be maintained between the DMRS of the first channel of the first RAT and the DMRS of the second channel of the second RAT in the frequency division multiplexing or code division multiplexing manner shown in FIG. 14, to ensure that the DMRS of the first channel of the first RAT and the DMRS of the second channel of the second RAT coexist in the spatial multiplexing manner on a basis that more DMRS ports of the first channel of the first RAT are enabled.

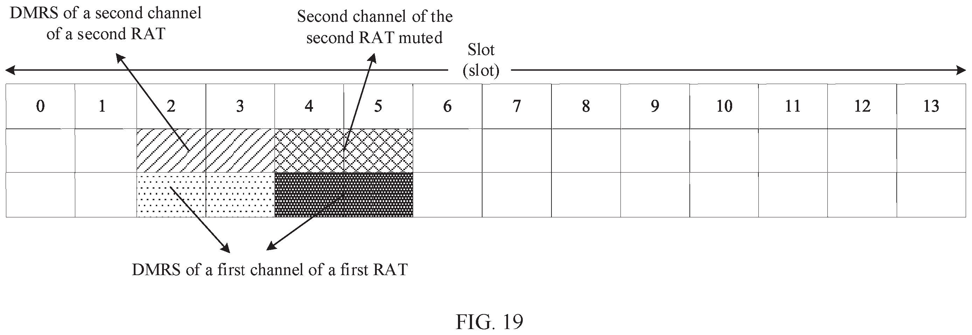

For example, as shown in FIG. 19, the time domain resource of the DMRS of the first channel of the first RAT may partially overlap the time domain resource of the DMRS of the second channel of the second RAT. On non-overlapping time domain resources (for example, on symbols 4 and 5), the network device of the second RAT may send third information or fourth information to the terminal device of the second RAT, to indicate a time domain resource and a frequency domain resource that are not for second channel transmission. On overlapping time domain resources (for example, on symbols 2 and 3), orthogonality may be maintained between the DMRS of the first channel of the first RAT and the DMRS of the second channel of the second RAT in the frequency division multiplexing or code division multiplexing manner shown in FIG. 14.

The third information indicates the time domain resource and the frequency domain resource that are not for second channel transmission, the fourth information includes configuration information of the DMRS of the first channel of the first RAT, and a time-frequency resource associated with the fourth information is not for second channel transmission of the second RAT. For the description of "the network device of the second RAT may send the third information to the terminal device of the second RAT", refer to the related description of "the network device of the first RAT may send the first information to the terminal device of the first RAT" in FIG. 9. For the description of "the network device of the second RAT may send the fourth information to the terminal device of the second RAT", refer to the related description of "the network device of the first RAT may send the second information to the terminal device of the first RAT" in FIG. 13. Details are not described herein again.

For example, assuming that the first RAT is the 6G communication system, and that the second RAT is the 5G communication system, a maximum quantity of time domain symbols of the DMRS of the second channel of the 5G communication system is 2. This limits a maximum quantity of supported DMRS ports to some extent, and limits a maximum quantity of spatial multiplexing layers or streams. Therefore, to support more DMRS ports, a maximum quantity of time domain symbols of the DMRS of the first channel of the 6G communication system may be greater than 2, for example, may be an integer multiple of 2, for example, 4, 6, or 8.

Assuming that the maximum quantity of time domain symbols of the DMRS of the first channel of the 6G communication system is 4, the following describes the DMRS of the first channel of the 6G communication system and the DMRS of the second channel of the 5G communication system by using examples with reference to the following two possible designs.

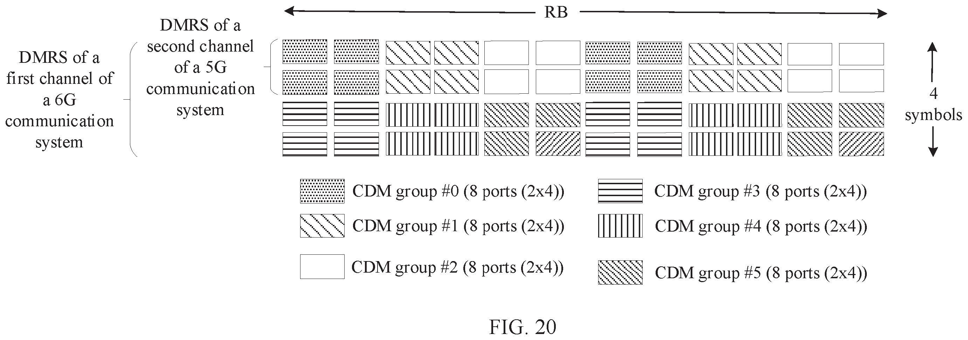

In a first possible design, the DMRS of the first channel of the 6G communication system may use an OCC with a length of 2 in time domain, and DMRS port orthogonality may be maintained through time division multiplexing in addition to frequency division multiplexing or code division multiplexing. For example, as shown in FIG. 20, similar to a type 2 DMRS in DMRSs of the second channel of the 5G communication system, the DMRS of the first channel of the 6G communication system may support six CDM groups. Each CDM group includes two symbols in time domain and four subcarriers in frequency domain, uses an OCC with a length of 2 in time domain, and uses an OCC with a length of 4 in frequency domain. In this case, each CDM group may support eight ports, and a total of 48 ports are supported. First two symbols or last two symbols of the DMRS of the second channel of the 5G communication system overlap those of the DMRS of the first channel of the 6G communication system.

Optionally, in the first possible design, the time domain OCC with the length of 2 used for the DMRS of the first channel of the 6G communication system may reuse the OCC used for the DMRS of the second channel of the 5G communication system. For example, as shown in Table 4, the OCC with the length of 2 may be any one of the following:

**Table 4**

| n | Time domain OCC |
|---|---|
| 0 | [+1 +1] |
| 1 | [+1 -1] |

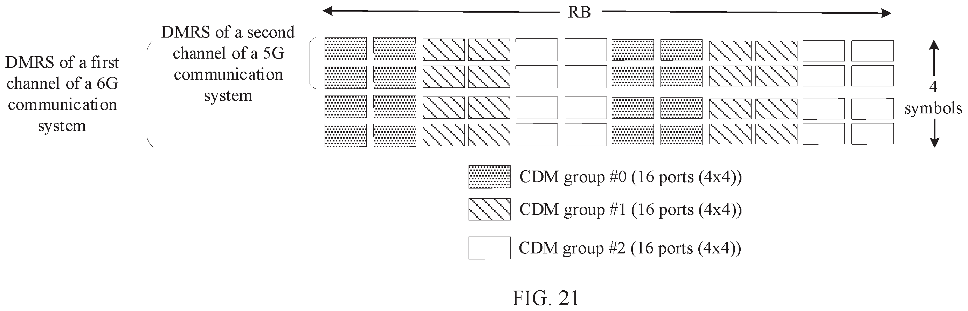

In a second possible design, the DMRS of the first channel of the 6G communication system may use an OCC with a length of 4 in time domain, and DMRS port orthogonality is maintained through frequency division multiplexing or code division multiplexing. For example, as shown in FIG. 21, similar to a type 2 DMRS in DMRSs of the second channel of the 5G communication system, the DMRS of the first channel of the 6G communication system may support three CDM groups. Each CDM group includes four symbols in time domain and four subcarriers in frequency domain, and uses an OCC with a length of 4 in time domain and an OCC with a length of 4 in frequency domain. In this case, each CDM group may support 16 ports, and a total of 48 ports are supported. First two symbols or last two symbols of the DMRS of the second channel of the 5G communication system overlap those of the DMRS of the first channel of the 6G communication system.

Optionally, in the second possible design, the time domain OCC with the length of 4 used for the DMRS of the first channel of the 6G communication system may be any one shown in Table 5:

**Table 5**

| n | Time domain OCC |
|---|---|
| 0 | [+1 +1 +1 +1] |
| 1 | [+1 -1 +1 -1] |
| 2 | [+1 +1 -1 -1] |
| 3 | [+1 -1 -1 +1] |

In the first possible design, a time domain resource of a DMRS port of the first channel of the 6G communication system is aligned with a time domain resource of a DMRS port of the second channel of the 5G communication system, and multiplexing efficiency thereof is higher than that of the second possible design. In the second possible design, the DMRS port of the first channel of the 6G communication system has a larger quantity of time domain symbols, and demodulation performance thereof is higher than that of the first possible design. A possible design to be used may be determined based on a specific communication scenario, and this is not limited.

It should be noted that embodiments of this application may be implemented separately, or may be implemented in combination. This is not limited. Unless otherwise stated or there is a logic collision, terms and/or descriptions in different embodiments provided in this application are consistent and may be mutually referenced, and technical features in different embodiments may be combined based on an internal logical relationship thereof, to form a new embodiment.

It may be understood that an execution body may perform some or all of the steps in embodiments of this application. The steps or operations are merely examples. Embodiments of this application may further include performing other operations or variations of various operations. In addition, the steps may be performed in an order different from the order presented in embodiments of this application, and not all the operations in embodiments of this application may be performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, each device may be divided into functional modules based on the foregoing method examples. For example, each functional module may be obtained through division based on each corresponding function, or two or more than two functions may be integrated into one processing module. The integrated module may be implemented in a form of hardware, or may be implemented in a form of a software functional module. It should be noted that the module division in embodiments of this application is an example, and is merely logical function division. There may be another division manner in actual implementation.

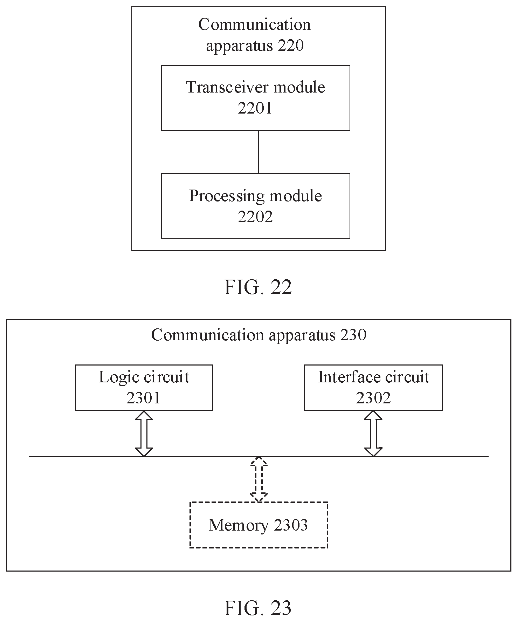

When each functional module is obtained through division based on each corresponding function, FIG. 22 shows a communication apparatus 220. The communication apparatus 220 may perform actions performed by the terminal device in the methods shown in FIG. 9 to FIG. 21, or perform actions performed by the network device in the methods shown in FIG. 9 to FIG. 21. All related content of steps in the foregoing method embodiments may be referenced in function descriptions of corresponding functional modules. For technical effects that can be achieved by the communication apparatus 220, refer to the foregoing method embodiments. Details are not described herein again.

The communication apparatus 220 may include a transceiver module 2201 and a processing module 2202. For example, the communication apparatus 220 may be a communication device, or may be a chip used in the communication device, or another combined device or component that has a function of the communication apparatus. When the communication apparatus 220 is a communication device, the transceiver module 2201 may be a transceiver, where the transceiver may include an antenna, a radio frequency circuit, and the like; and the processing module 2202 may be a processor (or a processing circuit), for example, a baseband processor, where the baseband processor may include one or more CPUs. When the communication apparatus 220 is a component that has a function of the communication apparatus, the transceiver module 2201 may be a radio frequency unit, and the processing module 2202 may be a processor (or a processing circuit), for example, a baseband processor. When the communication apparatus 220 is a chip system, the transceiver module 2201 may be an input/output interface of a chip (for example, a baseband chip), and the processing module 2202 may be a processor (or a processing circuit) of the chip system and may include one or more central processing units. It should be understood that the transceiver module 2201 in this embodiment of this application may be implemented by a transceiver or a transceiver-related circuit component, and the processing module 2202 may be implemented by a processor or a processor-related circuit component (or referred to as a processing circuit).

For example, the transceiver module 2201 may be configured to perform all sending and receiving operations performed by the communication apparatus in the embodiments shown in FIG. 9 to FIG. 21, and/or configured to support another process of the technology described in this specification. The processing module 2202 may be configured to perform all operations other than the sending and receiving operations performed by the communication apparatus in the embodiments shown in FIG. 9 to FIG. 21, and/or configured to support another process of the technology described in this specification.

In another possible implementation, the transceiver module 2201 in FIG. 22 may be replaced with a transceiver, and a function of the transceiver module 2201 may be integrated into the transceiver. The processing module 2202 may be replaced with a processor, and a function of the processing module 2202 may be integrated into the processor. Further, the communication apparatus 220 shown in FIG. 22 may further include a memory.

Alternatively, when the processing module 2202 is replaced with a processor, and the transceiver module 2201 is replaced with a transceiver, the communication apparatus 220 in this embodiment of this application may alternatively be a communication apparatus 230 shown in FIG. 23. The processor may be a logic circuit 2301, and the transceiver may be an interface circuit 2302. Further, the communication apparatus 230 shown in FIG. 23 may further include a memory 2303.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of procedures in the foregoing method embodiments may be implemented by related hardware instructed by a computer program. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk or memory of the terminal. The foregoing computer-readable storage medium may alternatively be an external storage device of the foregoing terminal, for example, a plug-in hard disk, a smart media card (smart media card, SMC), a secure digital (secure digital, SD) card, or a flash card (flash card) that is configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. The terms "first" and "second" are intended only for description, and shall not be understood as an indication or implication of relative importance or an implicit indication of a quantity of indicated technical features. Therefore, a feature defined by "first" or "second" may explicitly or implicitly include one or more features. In the descriptions of embodiments, unless otherwise specified, the term "a plurality of" means two or more.

In addition, the terms "include", "have", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item) "means one or more. "A plurality of" means two or more than two. "At least two (items)" means two, three, or more than three. "And/or" is used to describe an association relationship between associated objects, and indicates that three relationships may exist. For example, "A and/or B" may represent three cases: Only A exists, only B exists, and both A and B exist, where A and B may be singular or plural. The character "/" generally indicates an "or" relationship between associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. Both "when ..." and "if" mean that corresponding processing is performed in an objective case, are not intended to limit time, do not require a determining action during implementation, and do not mean that there is another limitation.

In embodiments of this application, the term "exemplary", "for example", or the like represents an example, an illustration, or a description. Any embodiment or design scheme described as an "example" or "for example" in embodiments of this application should not be explained as being more preferred or advantageous than another embodiment or design scheme. Exactly, use of the terms such as "example" or "for example" is intended to present a related concept in a specific manner for ease of understanding.

In this application, "sending information to ... (a terminal device)" may be understood as that a destination of the information is the terminal device, and may include directly or indirectly sending the information to the terminal device. "Receiving information from ... (a terminal device)" may be understood as that a source of the information is the terminal device, and may include directly or indirectly receiving the information from the terminal device. Information may undergo necessary processing, for example, a format change, between the source for sending the information and the destination. However, the destination may understand valid information from the source.

Based on the foregoing descriptions of implementations, a person skilled in the art may clearly understand that, for the purpose of convenient and brief description, division of the foregoing functional modules is used as an example for illustration. In actual application, the foregoing functions can be allocated to different modules and implemented based on a requirement, that is, an internal structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, the division of modules or units is merely logical function division and may be other division in actual implementation. For example, a plurality of units or components may be combined or integrated into another apparatus, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one physical unit or a plurality of physical units, that is, the parts may be located in one position or distributed in a plurality of different positions. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A communication method, wherein the method is applied to a first radio access technology RAT, and the method comprises:
receiving first information from a network device, wherein the first information indicates a time domain resource and a frequency domain resource that are not used for first channel transmission, the frequency domain resource indicated by the first information as not used for the first channel transmission comprises one or more subcarriers in one or more resource blocks RBs that are indicated by the first information as not used for the first channel transmission, and the first channel is a physical uplink shared channel or a physical downlink shared channel; and
determining, based on the first information, the time domain resource and the frequency domain resource that are not used for the first channel transmission.

2. The method according to claim 1, wherein
the first information comprises configuration information of one or more rate matching patterns, wherein a time-frequency resource associated with the rate matching pattern is the time domain resource and the frequency domain resource that are not used for the first channel transmission.

3. The method according to claim 2, wherein
configuration information of each rate matching pattern comprises first indication information and second indication information, wherein the first indication information indicates one or more RBs associated with the rate matching pattern, and the second indication information indicates one or more subcarriers in the one or more RBs associated with the rate matching pattern.

4. The method according to claim 3, wherein
the first indication information is a bitmap, and each bit in the bitmap indicates whether an RB corresponding to the bit belongs to the rate matching pattern.

5. The method according to claim 3 or 4, wherein
for each rate matching pattern, the second indication information indicates a subcarrier pattern jointly associated with all RBs associated with the rate matching pattern, wherein the subcarrier pattern comprises one or more subcarriers in one RB; or
for each rate matching pattern, the second indication information indicates subcarrier patterns respectively associated with all RBs associated with the rate matching pattern, wherein each subcarrier pattern comprises one or more subcarriers in one RB.

6. The method according to claim 2, wherein
configuration information of each rate matching pattern comprises third indication information, wherein the third indication information indicates one or more RBs associated with the rate matching pattern and one or more subcarriers associated with the one or more RBs.

7. The method according to claim 6, wherein
the third indication information comprises N*M bits, N is a quantity of RBs corresponding to the third indication information, each RB corresponds to M bits, and the M bits corresponding to each RB indicate whether the RB corresponding to the M bits belongs to the rate matching pattern and a subcarrier pattern associated with the RB.

8. The method according to claim 7, wherein
a first value of the M bits indicates that the RB corresponding to the M bits does not belong to the rate matching pattern; or
a second value of the M bits indicates that the RB corresponding to the M bits belongs to the rate matching pattern, and that the RB is associated with a first subcarrier pattern; or
a third value of the M bits indicates that the RB corresponding to the M bits belongs to the rate matching pattern, and that the RB is associated with a second subcarrier pattern; or
a fourth value of the M bits indicates that the RB corresponding to the M bits belongs to the rate matching pattern, and that the RB is associated with a third subcarrier pattern; or
a fifth value of the M bits indicates that the RB corresponding to the M bits belongs to the rate matching pattern, and that the RB is associated with a fourth subcarrier pattern.

9. The method according to any one of claims 5, 7, and 8, wherein the subcarrier pattern is one of the following subcarrier patterns:
a first subcarrier pattern, wherein the first subcarrier pattern comprises all subcarriers in one RB;
a second subcarrier pattern, wherein the second subcarrier pattern comprises first, third, fifth, seventh, ninth, and eleventh subcarriers in one RB;
a third subcarrier pattern, wherein the third subcarrier pattern comprises first, second, seventh, and eighth subcarriers in one RB; and
a fourth subcarrier pattern, wherein the fourth subcarrier pattern comprises first, second, third, fourth, seventh, eighth, ninth, and tenth subcarriers in one RB.

10. The method according to any one of claims 2 to 9, wherein
the configuration information of each rate matching pattern further comprises fourth indication information, wherein the fourth indication information indicates a time domain periodicity of the rate matching pattern and a time domain resource pattern in the periodicity.

11. The method according to claim 10, wherein
a candidate value of the time domain periodicity comprises one or more of the following: 1, 2, 4, 5, 8, 10, 20, 40, 80, 160, or 320 time units, and each time unit comprises one or more slots or subframes corresponding to the rate matching pattern.

12. The method according to any one of claims 2 to 11, wherein
the rate matching pattern is a rate matching pattern dedicated to a bandwidth part BWP; or
the rate matching pattern is a common rate matching pattern of a cell.

13. The method according to any one of claims 2 to 12, wherein the method further comprises:
receiving fifth indication information from the network device, wherein the fifth indication information indicates an effective rate matching pattern in the one or more rate matching patterns.

14. The method according to any one of claims 1 to 13, wherein
the one or more subcarriers indicated by the first information comprise all subcarriers in one RB; or
the one or more subcarriers indicated by the first information comprise first, third, fifth, seventh, ninth, and eleventh subcarriers in one RB; or
the one or more subcarriers indicated by the first information comprise first, second, seventh, and eighth subcarriers in one RB; or
the one or more subcarriers indicated by the first information comprise first, second, third, fourth, seventh, eighth, ninth, and tenth subcarriers in one RB.

15. The method according to any one of claims 1 to 14, wherein
the time domain resource and the frequency domain resource are determined based on a demodulation reference signal DMRS of a second channel of a second RAT, wherein the second channel is a physical uplink shared channel or a physical downlink shared channel.

16. A communication method, wherein the method is applied to a first radio access technology RAT, and the method comprises:
determining first information; and
sending the first information to a terminal device, wherein the first information indicates a time domain resource and a frequency domain resource that are not used for first channel transmission, the frequency domain resource indicated by the first information as not used for the first channel transmission comprises one or more subcarriers in one or more resource blocks RBs that are indicated by the first information as not used for the first channel transmission, and the first channel is a physical uplink shared channel or a physical downlink shared channel.

17. The method according to claim 16, wherein
the first information comprises configuration information of one or more rate matching patterns, wherein a time-frequency resource associated with the rate matching pattern is the time domain resource and the frequency domain resource that are not used for the first channel transmission.

18. The method according to claim 17, wherein the method further comprises:
sending fifth indication information to the terminal device, wherein the fifth indication information indicates an effective rate matching pattern in the one or more rate matching patterns.

19. A communication method, wherein the method is applied to a first radio access technology RAT, and the method comprises:
receiving second information from a network device, wherein the second information comprises configuration information of one or more demodulation reference signals DMRSs of a second channel of a second RAT, and the second channel is a physical uplink shared channel or a physical downlink shared channel; and
determining, based on the second information, a time-frequency resource associated with the second information, wherein the time-frequency resource associated with the second information is not for first channel transmission of the first RAT, and the first channel is a physical uplink shared channel or a physical downlink shared channel.

20. The method according to claim 19, wherein
configuration information of each DMRS comprises at least one of the following: a DMRS type, a quantity of DMRS symbols, a DMRS time domain position, a DMRS frequency domain resource, and a DMRS code division multiplexing CDM group without data.

21. The method according to claim 19 or 20, wherein the method further comprises:
receiving sixth indication information from the network device, wherein the sixth indication information indicates configuration information of a DMRS that takes effect in the configuration information of the one or more DMRSs.

22. The method according to any one of claims 19 to 21, wherein
in the configuration information of the one or more DMRSs, configuration information of at least one DMRS comprises seventh indication information, wherein the seventh indication information indicates that a time-frequency resource associated with the DMRS is not for the first channel transmission of the first RAT.

23. A communication method, wherein the method is applied to a first radio access technology RAT, and the method comprises:
determining second information; and
sending the second information to a terminal device, wherein the second information comprises configuration information of one or more demodulation reference signals DMRSs of a second channel of a second RAT, the second channel is a physical uplink shared channel or a physical downlink shared channel, a time-frequency resource associated with the second information is not for first channel transmission of a first RAT, and the first channel is a physical uplink shared channel or a physical downlink shared channel.

24. The method according to claim 23, wherein the method further comprises:
sending sixth indication information to the terminal device, wherein the sixth indication information indicates configuration information of a DMRS that takes effect in the configuration information of the one or more DMRSs.

25. A communication method, wherein the method is applied to a first radio access technology RAT, and the method comprises:
receiving eighth indication information from a network device, wherein the eighth indication information indicates a first demodulation reference signal DMRS port set, the first DMRS port set is used for a first channel of the first RAT, and the first channel is a physical uplink shared channel or a physical downlink shared channel;
receiving ninth indication information from the network device, wherein the ninth indication information indicates a reference frequency position corresponding to a DMRS of the first channel of the first RAT, and the reference frequency position is a start frequency position for generating the DMRS of the first channel of the first RAT; and
based on the eighth indication information and the ninth indication information, receiving the DMRS of the first channel of the first RAT by using one or more DMRS ports in the first DMRS port set, wherein the first channel is a physical downlink shared channel; or sending the DMRS of the first channel of the first RAT by using one or more DMRS ports in the first DMRS port set, wherein the first channel is a physical uplink shared channel.

26. The method according to claim 25, wherein
any DMRS port in the first DMRS port set is associated with 2*Q resource blocks RBs, wherein Q is a positive integer.

27. The method according to claim 26, wherein
the first DMRS port set comprises three code division multiplexing CDM groups, and each CDM group comprises one or more DMRS ports in the first DMRS port set, wherein any DMRS port in a first CDM group is associated with first, second, seventh, and eighth subcarriers of each of the 2*Q RBs, any DMRS port in a second CDM group is associated with third, fourth, ninth, and tenth subcarriers of each of the 2*Q RBs, and any DMRS port in a third CDM group is associated with fifth, sixth, eleventh, and twelfth subcarriers of each of the 2*Q RBs.

28. The method according to claim 26 or 27, wherein
any DMRS port in the first DMRS port set is associated with a frequency domain orthogonal cover code OCC whose length is 8*Q.

29. The method according to any one of claims 25 to 28, wherein
the first DMRS port set is associated with 4*P time domain symbols, wherein P is a positive integer.

30. The method according to claim 29, wherein
any DMRS port in the first DMRS port set is associated with two of the 4*P time domain symbols.

31. The method according to claim 29 or 30, wherein
the first DMRS port set comprises 2*P DMRS port subsets, each DMRS port subset comprises one or more DMRS ports in the first DMRS port set, and each DMRS port subset is associated with two of the 4*P time domain symbols.

32. The method according to any one of claims 29 to 31, wherein
any DMRS port in the first DMRS port set is associated with a time domain OCC whose length is 2.

33. The method according to claim 29, wherein
any DMRS port in the first DMRS port set is associated with all of the 4*P time domain symbols.

34. The method according to claim 29 or 33, wherein
any DMRS port in the first DMRS port set is associated with a time domain OCC whose length is 4*P.

35. The method according to any one of claims 25 to 34, wherein
the ninth indication information comprises an absolute radio frequency channel number corresponding to the reference frequency position; or
the ninth indication information comprises a common resource block CRB index corresponding to the reference frequency position.

36. The method according to any one of claims 25 to 35, wherein
a base sequence corresponding to a DMRS port in the first DMRS port set is the same as a base sequence corresponding to a DMRS port in a second DMRS port set, wherein the second DMRS port set is used for a second channel of a second RAT, and the second channel is a physical uplink shared channel or a physical downlink shared channel.

37. The method according to any one of claims 25 to 36, wherein
the reference frequency position corresponding to the DMRS of the first channel of the first RAT is the same as a reference frequency position corresponding to a DMRS of the second channel of the second RAT.

38. A communication method, wherein the method is applied to a first radio access technology RAT, and the method comprises:
sending eighth indication information to a terminal device, wherein the eighth indication information indicates a first demodulation reference signal DMRS port set, the first DMRS port set is used for a first channel of the first RAT, and the first channel is a physical uplink shared channel or a physical downlink shared channel;
sending ninth indication information to the terminal device, wherein the ninth indication information indicates a reference frequency position corresponding to a DMRS of the first channel of the first RAT, and the reference frequency position is a start frequency position for generating the DMRS of the first channel of the first RAT; and
based on the eighth indication information and the ninth indication information, receiving the DMRS of the first channel of the first RAT by using one or more DMRS ports in the first DMRS port set, wherein the first channel is a physical uplink shared channel; or sending the DMRS of the first channel of the first RAT by using one or more DMRS ports in the first DMRS port set, wherein the first channel is a physical downlink shared channel.

39. A communication apparatus, wherein the communication apparatus comprises a processor, and the processor is configured to run a computer program or instructions, so as to perform the communication method according to any one of claims 1 to 15, or perform the communication method according to any one of claims 16 to 18, or perform the communication method according to any one of claims 19 to 22, or perform the communication method according to claim 23 or 24, or perform the communication method according to any one of claims 25 to 37, or perform the communication method according to claim 38.

40. The communication apparatus according to claim 39, wherein
the communication apparatus further comprises a memory, and the memory is configured to store the computer program or the instructions.

41. A communication apparatus, wherein the communication apparatus comprises an interface circuit and a logic circuit, wherein the interface circuit is configured to input and/or output information; and the logic circuit is configured to perform the communication method according to any one of claims 1 to 15, or perform the communication method according to any one of claims 16 to 18, or perform the communication method according to any one of claims 19 to 22, or perform the communication method according to claim 23 or 24, or perform the communication method according to any one of claims 25 to 37, or perform the communication method according to claim 38, and perform processing based on the information and/or generate the information.

42. A computer-readable storage medium, wherein the computer-readable storage medium stores computer instructions or a program, and when the computer instructions or the program is run on a computer, the communication method according to any one of claims 1 to 15 is performed, or the communication method according to any one of claims 16 to 18 is performed, or the communication method according to any one of claims 19 to 22 is performed, or the communication method according to claim 23 or 24 is performed, or the communication method according to any one of claims 25 to 37 is performed, or the communication method according to claim 38 is performed.

43. A computer program product, wherein the computer program product comprises computer instructions, and when some or all of the computer instructions are run on a computer, the communication method according to any one of claims 1 to 15 is performed, or the communication method according to any one of claims 16 to 18 is performed, or the communication method according to any one of claims 19 to 22 is performed, or the communication method according to claim 23 or 24 is performed, or the communication method according to any one of claims 25 to 37 is performed, or the communication method according to claim 38 is performed.
